# EUROPEAN PATENT SPECIFICATION

(11) **EP 4 272 565 B1**
(45) Date of publication and mention of the grant of the patent: **09.07.2025**
(21) Application number: 22172193.9
(22) Date of filing: 06.05.2022
(51) Int. Cl.: A22C 11/02, A22C 11/12

(54) **A METHOD OF CONTROLLING A ROBOTIC DEVICE FOR SUPPLYING A CLIPPING MACHINE WITH A SUPPLY OF TUBULAR PACKAGING CASING**
VERFAHREN ZUM STEUERN EINER ROBOTERVORRICHTUNG ZUR VERSORGUNG EINER CLIPMASCHINE MIT SCHLAUCHFÖRMIGEN VERPACKUNGSHÜLLEN
PROCÉDÉ DE COMMANDE D'UN DISPOSITIF ROBOTIQUE POUR FOURNIR UNE MACHINE D'AGRAFAGE AVEC UNE ALIMENTATION D'ENVELOPPE D'EMBALLAGE TUBULAIRE

(43) Date of publication of application: 08.11.2023
(73) Proprietor: Poly-clip System GmbH & Co. KG, 65795 Hattersheim (DE)
(72) Inventor: Meyrahn, Joachim, 64390 Erzhausen (DE); Pfeifer, Andreas, 51688 Wipperfürth (DE)
(74) Representative: Eisenführ Speiser

(56) References cited:
- US-A1- 2019 059 400
- US-A1- 2019 059 402

## Description

The present invention relates to a method for controlling a robotic device by a control unit of a clipping machine, the robotic device being arranged in a system for producing sausage-shaped products by filling a filling material into a tubular packaging casing supply arranged on a filling tube of a clipping machine, wherein the system comprises at least the clipping machine, a storage device for storing at least one packaging casing supply, and a robotic device for transferring the packaging casing supply from the storage device to the filling tube of the clipping machine, wherein the control unit is adapted to provide control commands at least to the robotic device and preferably also to receive signals from the robotic device. The present invention further relates to such a system and to a robotic device being arranged in an aforesaid system for producing sausage-shaped products by filling a filling material into a tubular packaging casing arranged on a filling tube of a clipping machine.

In practice, packaging machines, like clipping machines, are known, for producing sausage-shaped products, like sausages. In such a clipping machine, filling material is fed into a tubular or bag-shaped packaging casing which is stored on a filling tube, and which is closed at its front end by a closure means, like a closure clip, i.e. the end of the packaging casing pointing in the feeding direction of the filling material. After a predetermined portion of filling material has been fed into the tubular or bag-shaped packaging casing, the filled tubular or bag-shaped packaging casing is gathered by gathering means, a plait-like portion being at least substantially free from filling material is formed thereto, and at least one first closure clip is placed and closed on said plait-like portion by a clipping device, for closing the portion of the tubular or bag-shaped packaging casing just filled. Additionally, at least one second closure clip may be placed for closing the front end of the sausage-shaped product to be produced next. For severing the sausage-shaped product just produced from the remaining supply of tubular or bag-shaped packaging casing, a cutting device may be provided for cutting off the plait-like portion between the first and second closure clip. The sausage-shaped product just produced may then be discharged from the clipping machine by a discharge device, like a belt conveyor, for further treatment, like cooking or smoking.

From US patent applications 2019/059400 and US 2019/059402, filling machines and methods for filling tubular casings are known. Each of said filling machines includes a filling apparatus which is coupled to a filling hopper via an extrusion head and a delivery tube. The filling apparatus includes a twist-off head with a receiving portion that is rotatable about a horizontal axis and a first and a second filling tube arranged horizontally and parallel to each other and mounted to the receiving portion. A casing braking system is provided at the front end of the said filling tube. The other filling tube is in the charging position, where a tubular casing is loaded onto said filling tube by a case loading unit. Said case loading unit includes a case magazine and a case gripping device. The case gripping device has vertically movable upper and lower gripper jaws, for positioning a tubular casing in front of the filling tube being in the charging position. A push-on device pushes the tubular casing from the case gripping device onto the filling tube.

In such a known clipping machine, a supply of tubular or bag-shaped packaging casing, which may be provided in the form of a hollow stick of tubular casing material, folded like a concertina, is manually shifted onto the filling tube, by an operator. The operator pivots the filling tube out of its filling position, shifts a tubular packaging casing supply onto the filling tube, and pivots the filling tube back into its filling position.

Refilling a tubular packaging casing supply onto a filling tube of a clipping machine by hand is time consumable and requires the presence of an operator for each refill event. Since clipping machines can have high cycle rates, it may be necessary for an operator to be constantly in front of the clipping machine to push new packaging casings onto the filling tube. Despite the high level of automation of a filling/clipping machine combination, this approach does not help to make the production process efficient. In addition, the operator's activity is monotonous and is thus physically and mentally stressful.

Thus, it is an object of the present invention, to overcome the above-mentioned drawbacks, and to create a possibility that the production process is efficient and the burden for an operator is reduced.

A method solving the aforesaid drawbacks is defined in independent method claim 1, wherein dependent claims 2 through 12 provide further developments of that method. In addition, a system overcoming the aforesaid problems is defined in independent system claim 13, wherein dependent claim 14 provides further a development of that system. Moreover, the aforesaid problems are solved by the use of a robotic device as defined in independent usage claim 15.

According to the present invention, there is provided a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided with at least a first filling tube and preferably a second filling tube, and a first and a second casing brake assembly, a storage device for storing at least one tubular packaging casing supply, and a robotic device for transferring a tubular packaging casing supply from the storage device onto a filling tube of the clipping machine, wherein the control unit is adapted to provide control commands, at least to the robotic device, and wherein the robotic device includes a first gripper unit or means for gripping a tubular packaging casing supply and a second gripper unit or means for gripping the first and second casing brake assemblies of the clipping machine. The method comprises the steps of removing the casing brake assembly from the filling tube by the second gripper unit, moving the robotic device into a take-up position for taking up by the gripper unit a tubular packaging casing supply provided in a storage device, gripping the tubular packaging casing supply provided in said storage device by the gripper unit, moving the robotic device from the take-up position toward the filling tube, transferring the tubular packaging casing supply onto the filling tube by the gripper unit, releasing the tubular packaging casing supply onto the filling tube of the clipping machine by the first gripper unit and positioning the casing brake assembly on the filling tube by the second gripper unit.

The method enables the transfer of a tubular packaging casing supply onto the filling tube being in a refill position, in which a tubular packaging casing supply will be shifted onto the filling tube, at least approximately independent from the position of the storage device and the refill position of the filling tube of the clipping machine. The robotic device may be programmed and controlled on the basis of various criteria, a single one or a plurality of several criteria. Such criteria can take into account the specific design of the production system and/or components thereof, and/or features of the sausage-shaped products to be produced.

For example, the current positions of the storage device and the filling tube in the refill position, and the moving path of the robotic device between the take-up or pick-up position and a release position, in which the tubular packaging casing supply is released onto the filling tube, could be selected according to desired parameters, like the shortest or fastest moving path, and/or dependent on the periphery. Thus, a complex design or cumbersome alignment of the storage device and the clipping machine may be omitted.

Alternatively or additionally, criteria regarding features of the sausage-shaped products to be produced could be the kind and size of the sausage-shaped products, like the length, the filling level of the sausage-shaped product to be filled or the kind and size of the tubular packaging casing. The inventive method for controlling the robotic device, particularly when taking into account one or more of these and possible further product-specific features enables an adaption of the operation of the robotic device to the kind of sausage-shaped products to be produced. This leads to an optimization of the whole production system.

The method according to the invention enables the automated refilling of a new or unused tubular packaging casing supply onto a filling tube. This relieves an operator from the monotonous work of refilling a tubular packaging casing supply onto a filling tube. In addition, damage to the relatively sensitive tubular packaging casing supply, depending on the casing material used, can also be avoided and the supply can be safely applied to the filling tube.

One of the basic ideas of the present invention has been explained above on the basis of a clipping machine with two filling tubes. Of course, the clipping machine can also have more than two filling tubes. It is also possible to provide the method of the present invention for a clipping machine with only one filling tube, in which case the individual steps are to be adapted accordingly.

The tubular packaging casing supply may advantageously be provided in the form of hollow sticks of folded and shirred tubular casing. These hollow casing sticks may easily and reliably be gripped by the gripper unit of the robotic device for being removed from the storage device and transferred onto the filling tube.

It is particularly advantageous if the tubular packaging casing supply is already closed at one end by at least one closure means, such as a closure clip. The closed end of the supply is the end that points in the filling direction when the supply is placed on a filling tube.

The use of a gripper unit allows the tubular packaging casing supply to be provided in various positions, like horizontal or vertical, and thus, no specific storage device is needed. In particular, the storage device may be designed independently from the kind of filling tube and its orientation in the refill position.

The first gripper unit for gripping a tubular packaging casing supply can be designed in different ways. In a preferred embodiment, the gripping unit of the robotic device includes at least a first and a second gripper element being arranged laterally along a longitudinally extending gripping axis, and at least a first sensor unit associated with the gripper unit, for detecting the position of the first gripper unit relative to the tubular packaging casing supply in the storage device, and/or for detecting the position of the gripper unit relative to the filling tube. Such a sensor unit enables an exact positioning of the gripper unit for gripping the tubular packaging casing supply and an exact positioning of the tubular packaging casing supply onto the filling tube. Thereby, damages to the tubular packaging casing supply and/or to components of the clipping machine, e.g. by accidental collisions, may be prevented, and production losses may be omitted. Various sensor units for detecting the position of the gripper unit may be used, like contact sensors or contactless sensors. In order to prevent damages, preferably, contactless sensors may be used, like optical sensors, inductive sensors or ultrasonic sensors.

In the same way, also the second gripper unit for gripping the casing brake assemblies may include gripper elements, which are adapted such that they can securely grip and hold a casing brake assembly. Moreover, the second gripper unit may also be provided with sensor units that enable the detection of the position of the second gripper unit relative to the respective casing brake assembly and/or a gripping force executed by the second gripper unit to the casing brake assembly.

In order to enable both, gripping the tubular packaging casing supply to be transferred onto the filling tube, and the casing brake assembly to be removed from or to be shifted onto the filling tube, the method according to the present invention includes the step of exchanging a first gripper unit of robotic device, for gripping a tubular packaging casing supply by a second gripper unit for gripping the at least first casing brake assembly, for reversibly removing the first casing brake assembly from the at least first filling tube.

In an advantageous embodiment, the method further comprises the step of securing the tubular packaging casing supply on the first filling tube by at least one retainer device. Thereby, unintentional unfolding or falling off of the tubular packaging casing supply from the first filling tube is prevented.

It is further of advantage that the gripper unit includes at least a second sensor unit, for sensing the gripping force exerted by the at least first and second gripper elements to the tubular packaging casing supply while being gripped. The second sensor unit may include a suitable sensor element, like a pressure sensor, a force sensor or a piezo sensor. Thereby, the tubular packaging casing supply may securely gripped by the gripper unit, and damages to the tubular packaging casing supply may be omitted.

Furthermore, for preventing damages to the tubular packaging casing supply while being gripped by the gripper unit, the gripping force exerted by the first gripper unit provided preferably with at least first and second gripper elements onto the tubular packaging casing supply may be limited to a predefined value. The limit of the gripping force, or its predefined value respectively, may be selected dependent on the kind of casing material and/or on the size of the casing material, like its diameter, the lengths or the weight of the tubular packaging casing supply.

The inventive method may further comprise the step of moving the gripper unit along a predefined moving path towards the filling tube of the clipping machine. Such a predefined path securely prevents damages, and particular collisions between the robotic device and the clipping machine and/or peripheral devices.

For being moved on a predefined path between the storage device and the filling tube of the clipping machine, the robotic device may be programmed and controlled respectively, e.g. in accordance with the kind of clipping machine or the kind and position of peripheral devices. Thus, the movement of the robotic device may exactly be adapted to the specific operation conditions. Moreover, for optimizing the operation of the robotic device, such a predefined path may be selected to be the shortest and/or the most efficient path. The programming may be executed by an operator that implements a respective program into the control unit of the clipping machine or the control unit of the robotic device. Alternatively, the robotic device may manually be guided along a selected path, and said path may thereby be stored in the control unit. In a further alternative design, the robotic device includes a specific sensor unit that allows the detection of the position of the robotic device relative to its surrounding area, and specifically, to devices in its surrounding area. The robotic device may than find a respective moving path by self-learning, e.g. during one or more test runs.

For controlling the operation of the robotic device, it is possible that the programming regarding the movement path of the robotic device is stored in the control unit of the robotic device, and that the commands for controlling the robotic device, at least essential commands, like a general start or stop command or commands based on information received from other components of the system, are output from the control unit of the clipping machine. However, it is also possible that the control unit of the clipping machine includes the programming and the control logic for executing control of the robotic device. In this case, a separate control unit for the robotic device may be omitted.

In a preferred embodiment, the method further comprising the step of position the first gripper unit with its gripping axis coaxially to the central axis of the filling tube and in front of the filling tube, and shifting the tubular packaging casing supply onto the filling tube by the gripper unit. In this arrangement, the first sensor unit may detect the position of the tubular packaging casing supply on the filling tube, and the tubular packaging casing supply may be released onto the filling tube.

The inventive method thereby enables an exact positioning of the tubular packaging casing supply onto the filling tube, without damaging the tubular packaging casing supply.

In a further preferred embodiment, the operation of the robotic device may be adapted to the production process executed by the clipping machine. The adaption of the operation of the robotic device may include the adaption of one or more of the moving path sections, the time points of starting and stopping the robotic device or its movement speed. Thereby, the operation of the robotic device may be optimized in accordance with specific products to be produced or specific operation conditions of the system or components thereof.

In order to refill tubular packaging casing supply onto the filling tube of the clipping machine or to equip the filling tube with a tubular packaging casing supply, the robotic device may be activated upon a signal indicating a specific condition of the clipping machine. This specific condition of the clipping machine may be a predefined amount of tubular packaging casing supply on the filling tube involved in the production process, namely the filling tube in the working position, in which filling material is fed into tubular packaging casing supply. During using up the remaining tubular casing supply on the filling tube in the working position, the robotic device may take-up tubular packaging casing supply from the storage device, and may be moved towards the filling tube. Thereby, the time for refilling tubular packaging casing supply onto the filling tube may be shortened.

Alternatively, the signal for activating the robotic device may be derived from the position of the filling tube that is just moved towards the refill position, like a specific angular position of the filling tube, or from the position of the casing brake assembly, e.g. when removed from the filling tube being currently in the working position. Further, alternatively, the signal indicating a specific condition of the clipping machine may be derived from the clipping cycle, e.g. a specific time point in the clipping cycle.

It has to be understood that the robotic device may be started immediately after receipt of the signal indicating the specific condition of the clipping machine, or a predefined time period after receiving said signal.

Further, alternatively, or additionally thereto, the robotic device may also be activated upon a signal indicating a specific condition of the storage device, like the presence of tubular packaging casing supply.

In a preferred embodiment, the robotic device may be deactivated upon a signal indicating a specific condition of the clipping machine and/or a specific condition of the storage device. Such a signal may indicate failure in the production process of the clipping machine, like missing closure clips, malfunctions of the filler, a casing burst or any other technical problem of the clipping machine, which may be determined by the control unit of the clipping machine. The signal, on the basis of which the robotic device may be stopped, may also be received from the storage device, like a signal indicating the absence of tubular packaging casing supply in the storage device, or a signal indicating technical problems or malfunctions of the storage device. Such a signal may further be transmitted to the operator, including information regarding the specific condition or problem as well as an instruction for solving said problem.

The clipping machine according to the present invention includes at least two filling tubes, with one filling tube being arranged in a filling position in which filling material is fed into the tubular packaging casing, and the other filling tube arranged in a refill position in which a tubular packaging casing supply is fed onto the filling tube, it is of advantage that, in accordance with the inventive method, the robotic device may be activated upon a signal indicating one of the filling tubes, which is arranged in or moving towards the refill position. Thereby, the refill process may further be shortened. The signal may just indicate the movement of the filling tube towards the refill position or indicating the filling tube as being in a predefined angular position relative to the working position or the refill position.

For enabling a safe gripping and releasing of the tubular packaging casing supply, it further of advantage that the gripper unit includes at least one further sensor unit for detecting the position of the gripper elements. Said sensor may indicate the gripper elements in an opened position, a closed position or any position there between. The sensor signal, when indicating the gripper elements in their opened position, may be used to actuate the robotic device, e.g. to move the robotic device into the take-up position, for gripping a tubular packaging casing supply positioned in the storage device. Accordingly, when indicating the gripper elements in their closed position, the robotic device may be activated to move towards the filling tube of the clipping machine.

The first gripper unit for gripping a tubular packaging casing supply may detachably be coupled to the robotic device. In this case, the gripper unit may be replaced by another gripper unit, like the second gripper unit, or a further first gripper unit, in order to adapt the robotic device to the tubular packaging casing supply used. However, it is also possible that the gripper unit has a universal size, such that the gripper unit may be used for each, or at least a great variety of tubular packaging casing supplies.

As mentioned several times, another idea of the invention is to provide a system for the production of sausage-shaped products, such as sausages, by filling a filling material into a tubular packaging casing supply arranged on a filling tube of a clipping machine. The system comprising at least a storage device for storing at least one packaging casing supply, a clipping machine provided with at least a first filling tube and preferably a second filling tube onto each of which a packaging casing supply can be applied, a robotic device for transferring a packaging casing supply from the storage device onto a filling tube of the clipping machine and having at least a first griper unit for gripping a tubular packaging casing supply, and a second gripper unit for gripping a casing brake assembly of the clipping machine, and a control unit for controlling the operation of at least the robotic device, wherein the control unit is adapted to control the operation of the robotic device depending on the filling status of a sausage-shaped product to be filled.

The refilling process can thus be optimally adapted to the respective production. In particular, it is possible to provide individual starting times for the refilling process according to the product to be manufactured. This increases the flexibility in the control of the system and the possible applications of the system according to the invention.

In a further preferred embodiment, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

For enabling a movement of the filling tubes from the lateral position into the refill position, when being rotated by the revolver plate of the filling tube assembly, with a reduced risk of collision, in one embodiment of the clipping machine, a recess may be provided in the housing of the clipping machine, which enables a passage of the filling tubes, and particularly, of the front ends of the filling tubes, during their movement between the lateral position and the refill position. Said recess is arranged in the region of the right edge of the front side of the clipping machine, below the filling tube when in the filling position.

This recess has the further advantage that the angle about which the filling tubes have to be pivoted outwards into the lateral position, i.e. the angle between the filling position and the lateral position of the filling tube, may be smaller compared with such an angle in a clipping machine, which is not provided with such a recess. Thereby, also the necessary operation space in front of the clipping machine is reduced.

The system according to the invention enables the refilling of a tubular packaging casing supply onto the filling tube positioned in the refilling position to be carried out in parallel with the filling process. This considerably shortens production times compared to the prior art and allows continuous production to be carried out.

According to the present invention, there is further provided the use of a robotic device including a gripper unit, controlled by the inventive method as explained herein, and being arranged in a system for producing sausage-shaped products.

There is further disclosed a filling tube assembly of a clipping machine for producing sausage-shaped products, like sausages, by filling a filling material into a tubular packaging casing, the filling tube assembly comprising: a revolver plate, which is rotatable about a rotation axis, at least a first filling tube and a second filling tube, each having a central axis, wherein the filling tubes are mounted on the revolver plate, at least a first casing brake assembly and a second casing brake assembly, wherein the first casing brake assembly is connected to the first filling tube and the second casing brake assembly is connected to the second filling tube, and a drive device for rotating the revolver plate including the filling tubes about the rotation axis, wherein the central axis of the first filling tube and the central axis of the second filling tube define an angle larger than 0°, preferably between 15° and 75°, and more preferably between 30° and 60°.

Preferably, the first casing brake assembly is associated with the first filling tube and includes a first casing brake unit positioned in the region of a first end of the first filling tube, and is pivotally coupled to the revolver plate by a first telescopic casing brake holder unit, and the second casing brake assembly is associated with the second filling tube and includes a second casing brake unit positioned in the region of a first end of the second filling tube, and is pivotally coupled to the revolver plate by a second telescopic casing brake holder unit.

Preferably, the first casing brake unit is linearly reversibly shiftable along the first filling tube onto its first end and pivoted away from the first end of the first filling tube, and the second casing brake unit is linearly reversibly shiftable along the second filling tube onto its first end and pivoted away from the first end of the second filling tube.

Preferably, the first casing brake holder unit includes a telescopic guidance and a telescopic drive for extending and retracting telescopic guidance, and the second casing brake holder unit includes a telescopic guidance and a telescopic drive for extending and retracting telescopic guidance.

Preferably, the telescopic drives are linear drives, particularly, piston/cylinder drives.

Preferably, the filling tube assembly further comprises a first pivot drive unit, which is provided for pivoting the first casing brake assembly relative to the first filling tube about a pivot point at which the first casing brake assembly is coupled to the revolver plate, and the filling tube assembly further comprises a second pivot drive unit, which is provided for pivoting the second casing brake assembly relative to the second filling tube about a pivot point at which the second casing brake assembly is coupled to the revolver plate.

Preferably, the filling tube assembly is mounted on a framework via a joint portion.

Preferably, the joint portion is mounted on a side wall of the framework.

Preferably, the filling tube assembly is linearly and/or rotatably shiftable such that the filling tube is positioned in front of the clipping machine.

Preferably, a feeding socket is fixed to the revolver plate and facing away from the clipping machine, wherein feeding socket is coaxially aligned with the central axis of the filling tube.

There is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly as mentioned above, gathering means for gathering the filled tubular packaging casing and for forming a plait-like portion thereto, the gathering means including a first displacer unit and a second displacer unit, a clipping device having a first and a second closing tool being reversibly movable between an opened position and a closed position, for applying at least one closure means to the plait-like portion and closing said closure means when the closing tools are in their closed position, a discharge device for discharging the sausage-shaped product just produced out of the clipping machine, and a control unit for controlling at least the clipping machine and the robotic device.

Preferably, the robotic device includes: a gripper unit for gripping a tubular packaging casing supply provided by the storage device, and for transferring said tubular packaging casing supply onto the at least first filling tube of the clipping machine; and a control unit for controlling at least the gripper unit.

Preferably, the storage device includes: at least a first storage assembly in which at least one tubular packaging casing supply is provided for being transferred by the robotic device onto the at least first filling tube of the clipping machine.

Preferably, the first filling tube is movable between a filling position, in which filling material is fed through the first filling tube into the tubular packaging casing stored on the first filling tube, and a refill position, in which a tubular packaging casing supply is transferred onto the first filling tube.

There is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least first filling tube, and transferring by the robotic device a tubular packaging casing supply provided by a storage device onto the at least first filling tube being arranged in the refill position.

There is further disclosed a gripping device for picking up, conveying and delivering a casing tube such as a casing tube of a sausage, the gripping device comprising: a longitudinal base structure which is attached to a handling device by means of a coupling element, preferably in a non-destructively detachable manner, at least two gripper members having each at least one bottom surface and at least one top surface, wherein the gripper members of the gripping device are provided with gripping surfaces, at least two drive means, which are attached to the axial ends of the base structure, for reversibly moving the gripper members between a first position in which the gripper members are positioned on opposite sides of the casing tube to be picked up, and a second position in which the gripper members seize the casing tube to be picked up, and a control unit for simultaneously driving the drive means of the gripper members.

Preferably, the drive means are driven pneumatically, and wherein the drive means are supplied by means of a compressed air supply via a common valve and respective conduits.

Preferably, the conduits from the common valve to the respective drive means are substantially of the same length.

Preferably, a respective flow restrictor is connected to the drive means for compensating unsynchronized movements during opening and closing of the gripper members by the drive means.

Preferably, at least one of the gripper members is translatory and/or rotatory movable with respect to the base structure.

Preferably, each of the gripper members is guided by at least two guide rods.

Preferably, at least one of the gripper members comprises a detection means which is capable of detecting the contact of the casing tube, wherein preferably two opposing gripper members comprise each a detection means.

Preferably, the drive means are connected to the gripper members via at least one connecting bracket having preferably a curved shape.

Preferably, the base structure and/or the at least two gripper members comprise a plurality of through holes and oblong holes for reducing the weight of the gripping device.

There is further disclosed a system for picking up, conveying and delivering a casing tube such as a casing tube of a sausage, the system comprising: a delivering bar on which the respective casing tube is stored, a receiving bar on which the respective casing tube is to be inserted, and a transporting apparatus including a handling device and a gripping device as mentioned above for conveying the casing tube from the delivering bar on the receiving bar.

Preferably, the system further comprises at least one magazine including a plurality of delivering bars, wherein the at least one magazine is mounted on a framework, wherein preferably two magazines are arranged on the framework opposite to each other.

Preferably, the framework is rotatable and configured to rotate the at least one magazine in a picking up position and a loading position, respectively.

Preferably, the at least one magazine comprises a plurality of substantially vertical delivering bars, wherein preferably the delivering bars are arranged in a circle with a predefined distance to each other.

Preferably, the at least one magazine is rotatable and configured to rotate one of the delivering bars in the picking up position.

Preferably, the gripping device of the transporting apparatus is configured to pick up a casing tube from the delivering bar and to deliver said casing tube on the receiving bar which is a filling tube of a clipping machine.

Preferably, the transporting apparatus is attached to the clipping machine, preferably on a back plate of the clipping machine or on a top plate of the clipping machine.

There is further disclosed a magazine for providing at least one tubular-shaped packaging casing suitable for receiving a flowable filling material in the production of sausage-shaped products, in particular sausages, comprising: at least one mandrel for holding at least one packaging casing, wherein the at least one mandrel has a longitudinal mandrel axis, and wherein the at least one mandrel comprises a free end at a first mandrel end, and a conveyor for holding at least one mandrel in an upright position, wherein the conveyor conveys the at least one mandrel from a loading position to a delivery position.

Preferably, at least one retaining element is provided wherein the retaining element is arranged at least at the proximity of the first mandrel end for releasably retaining the packaging casing on the at least one mandrel.

Preferably, the at least one retaining element has at least one first section in which it releases the free end of the at least one mandrel and at least one second section in which the free end of the at least one mandrel is capped by the at least one retaining element.

Preferably, the at least one retaining element is made of a material which is elastic at least in sections.

Preferably, the longitudinal mandrel axis is oriented at least approximately vertically or forms an acute angle with the vertical line.

Preferably, the conveyor is a circulating conveyor belt driven by a motor, wherein the conveyor belt is preferably arranged in an oval configuration.

Preferably, the at least one mandrel has a second mandrel end spaced apart from the first mandrel end along the longitudinal mandrel axis and is attached to a respective mandrel carrier means positioned on the conveyer.

Preferably, the at least one mandrel comprises at least one support element for supporting the packaging casing, the at least one support element is preferably reversibly adjustable in its position along the mandrel.

Preferably, the conveyor is inclined in its longitudinal axis.

Preferably, the at least one retaining element is held by holding means coupled by a shaft to the mandrel carrier means for supporting the holding means and transmitting forces from the mandrel carrier means to the holding means.

Preferably, the carrier means are holding the mandrel, the shaft and the holding means.

There is further disclosed a production system, in particular a clipping machine, for filling and closing a tubular or bag-shaped packaging casing to produce sausage-shaped products, in particular sausages, comprising: at least one magazine as mentioned above, and a robot to pick-up a packaging casing provided at the magazine and to place it at a filling unit.

Preferably, the loading position and the delivery position of the conveyor is separated by a separating wall, wherein the separating wall includes at least one window for passing the conveyor including the at least one mandrel.

Preferably, the separating wall includes at least one sensor to monitor the at least one window of the separating wall for unexpected movements such as a hand of an operator.

Preferably, the at least one sensor is switched off while a mandrel is passing the window of the separating wall.

There is further disclosed a magazine for providing at least one tubular-shaped packaging casing suitable for receiving a flowable filling material in the production of sausage-shaped products, in particular sausages, comprising: a longitudinal magazine axis, at least one mandrel for holding at least one packaging casing, wherein the at least one mandrel has a longitudinal mandrel axis, which extends at least approximately parallel to the longitudinal magazine axis, and wherein the at least one mandrel comprises a free end at a first mandrel end, and at least one retaining element arranged at least at the proximity of the first mandrel end for releasably retaining the packaging casing on the at least one mandrel.

Preferably, the longitudinal magazine axis is oriented at least approximately vertically.

Preferably, the at least one retaining element has at least one first section in which it releases the free end of the at least one mandrel and at least one second section in which the free end of the at least one mandrel is capped by the at least one retaining element.

Preferably, the at least one retaining element is made of a material which is elastic at least in sections.

Preferably, the at least one mandrel has a second mandrel end spaced apart from the first mandrel end along the longitudinal mandrel axis and is attached to mandrel carrier means.

Preferably, the mandrel carrier means are rotatable around the longitudinal magazine axis.

Preferably, the at least one retaining element is held by holding means coupled by a shaft to the mandrel carrier means for supporting the holding means and transmitting forces from the mandrel carrier means to the holding means.

Preferably, the mandrel carrier means have a first diameter and the holding means have a second diameter, and wherein the first diameter is greater than the second diameter.

Preferably, the at least one mandrel is arranged at the mandrel carrier means along a circular ring that is perpendicular to the magazine axis.

Preferably, the circular ring has a ring diameter, and the first diameter is greater than the ring diameter and/or the ring diameter is larger than the second diameter.

Preferably, the at least one mandrel comprises at least one support element for supporting the packaging casing, the at least one support element is preferably reversibly adjustable in its position along the mandrel.

There is further disclosed a revolver comprising at least two magazines as mentioned above, wherein the at least two magazines are arranged on revolver carrier means, which are rotatable around a revolver axis extending at least approximately parallel to the longitudinal magazine axis.

Preferably, the revolver carrier means have at least a first position in which one magazine is arranged in a delivery position and at least a second position in which the further magazine is arranged in a feeding position.

Preferably, comprising at least one separating wall for separating the first position from the second position.

There is further disclosed a production machine, in particular a clipping machine, for filling and closing a tubular or bag-shaped packaging casing to produce sausage-shaped products, in particular sausages, comprising: at least one magazine as mentioned above and/or at least one revolver as mentioned above, and a robot to pick-up a packaging casing provided at the magazine and/or at the revolver and to place it at a filling unit.

There is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly having at least a first filling tube for feeding the filling material into the tubular packaging casing stored on the filling tube and being closed at its first end, at least a first casing brake assembly, associated with the first filling tube, for applying a braking force to the tubular packaging casing while being pulled-off from the first filling tube, and a control unit for controlling at least the clipping machine, the robotic device includes: at least a first gripper unit for gripping a tubular packaging casing supply provided by the storage device, and for transferring said tubular packaging casing supply onto the at least first filling tube of the clipping machine; and at least a second gripper unit for gripping the at least first casing brake assembly, for reversibly removing the at least first casing brake assembly from the at least first filling tube; and the storage device includes: at least a first storage assembly in which at least one tubular packaging casing supply is provided for being transferred by the robotic device onto the at least first filling tube of the clipping machine.

Preferably, a receiving device is provided for at least temporarily receiving the first and/or the second gripper unit, wherein, preferably, the receiving device is provided at the clipping machine.

Preferably, the receiving device includes at least a first holding unit and a second holding unit for at least temporarily accommodating the first and/or second gripper unit.

Preferably, at least one retainer device is provided for temporarily securing the tubular packaging casing supply on the first filling tube in the refill position.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the first gripper unit relative to the storage device and/or the position of the first gripper unit relative to the first and/or second filling tube arranged in the refill position.

Preferably, the robotic device includes a second sensor unit for determining a gripping force applied to the tubular packaging casing supply by the first gripper unit.

Preferably, the storage device includes at least a third sensor unit for detecting the presence or absence of a tubular packaging casing supply in the storage device.

Preferably, the system further including a hanging line arranged downstream the discharge device, for suspending the sausage-shaped products discharged from the clipping machine by the discharge device onto a rod-like element, like a smoking rod, the hanging line includes a control unit for controlling at least the hanging line, wherein, preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

There is further disclosed a method for producing sausage-shaped products in a system as mentioned above, the method comprises the steps of: producing a sausage-shaped product by a clipping machine having an at least first filling tube onto which a tubular packaging casing is stored into which filling material is fed, the method further comprises the steps of: moving the at least first filling tube from a filling position, in which filling material is fed into the tubular packaging casing, into a refill position, in which a tubular packaging casing supply is transferred onto the at least first filling tube, removing by the robotic device a first casing brake assembly from the at least first filling tube being in the refill position, and transferring by the robotic device a tubular packaging casing supply provided by a storage device onto the at least first filling tube being arranged in the refill position.

Preferably, the method further comprises the step of positioning by the robotic device the first casing brake assembly onto the at least first filling tube.

Preferably, the method further comprises the step of exchanging a first gripper unit of the robotic device, for gripping a tubular packaging casing supply by a second gripper unit for gripping the at least first casing brake assembly, for reversibly removing the first casing brake assembly from the at least first filling tube.

Preferably, the method further comprises the step of suspending the sausage-shaped product discharged by the discharge device on a rod-like element provided by the hanging line, wherein, preferably, the clipping machine controls at least partially the robotic device and/or the hanging line.

There is further disclosed a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided with at least two filling tubes, a storage device for storing at least one tubular packaging casing supply, and a robotic device for transferring a tubular packaging casing supply from the storage device onto a filling tube of the clipping machine, wherein the control unit is adapted to provide control commands at least to the robotic device, and wherein the robotic device includes a gripper unit for gripping a tubular packaging casing supply, the method comprises the steps of: moving the robotic device into a take-up position for taking up by the gripper unit a tubular packaging casing supply provided in a storage device; gripping the tubular packaging casing supply provided in a storage device by the gripper unit; moving the robotic device from the take-up position toward the filling tube; transferring the tubular packaging casing supply onto the filling tube by the gripper unit; and releasing the tubular packaging casing supply onto the filling tube of the clipping machine by the gripper unit.

Preferably, the robotic device includes at least a first sensor unit associated with the gripper unit, for detecting the position of the gripper unit relative to the tubular packaging casing supply in the storage device and/or for detecting the position of the gripper unit relative to the filling tube.

Preferably, the gripper unit includes at least a first and a second gripper element being arranged laterally along a longitudinally extending gripping axis, and at least a second sensor unit, for sensing the gripping force exerted by the at least first and second gripper elements onto the tubular packaging casing supply wherein, preferably, the method further comprising the step of: limiting the gripping force exerted by the at least first and second gripper elements onto the tubular packaging casing supply to a predefined value.

Preferably, the method further comprises the step of moving the gripper unit along a predefined moving path towards the filling tube of the clipping machine.

Preferably, the method further comprises the step of position the gripper unit with its gripping axis coaxially to the central axis of the filling tube and in front of the filling tube; and shifting the tubular packaging casing supply onto the filling tube by the gripper unit.

Preferably, the method further comprises the step of detecting by the first sensor unit the position of the tubular packaging casing supply on the filling tube; and releasing the tubular packaging casing supply onto the filling tube.

Preferably, filling tube of the clipping machine is provided with a casing brake assembly, the method further comprises the step of: positioning the casing brake assembly in front of the filling tube after the tubular packaging casing supply has been shifted onto the filling tube and prior the tubular packaging casing supply has been released onto the filling tube by the gripper unit.

Preferably, the robotic device is activated upon a signal indicating a specific condition of the clipping machine.

Preferably, the robotic device is deactivated upon a signal indicating a specific condition of the clipping machine and/or a specific condition of the storage device.

Preferably, the clipping machine includes a first filling tube and at least a second filling tube, with one filling tube being arranged in a filling position in which filling material is fed into the tubular packaging casing, and the other filling tube being arranged in a refill position in which a tubular packaging casing supply is fed onto the filling tube, and wherein the robotic device is activated upon a signal indicating one of the first or second filling tubes being arranged in or moving towards the refill position.

Preferably, the gripper unit includes at least one further sensor unit for detecting the position of the gripper elements.

There is further disclosed a system for producing sausage-shaped products, like sausages, by filling a filling material into a tubular packaging casing supply arranged on a filling tube of a clipping machine, comprising at least: a storage device for storing at least one packaging casing supply; a clipping machine provided with at least two filling tubes onto each of which a packaging casing supply can be applied; a robotic device for transferring a packaging casing supply from the storage device onto a filling tube of the clipping machine; and a control unit for controlling the operation of at least the robotic device, wherein the control unit is adapted to control the operation of the robotic device depending on the filling status of a sausage-shaped product to be filled.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the first filling tube is provided with a first casing brake unit reversibly removable from the first filling tube and the second filling tube is provided with a second casing brake unit reversibly removable from the second filling tube, and wherein the control unit is configured to release the tubular packaging casing supply fed to the filling tube located in the refilling position when the respective casing brake unit is positioned in front of the filling tube shortly before being pushed onto the latter.

There is further disclosed a robotic device including a gripper unit and arranged in a system for producing sausage-shaped products as mentioned above and controlled by the method as mentioned above.

There is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply, the clipping machine comprises: a filling tube assembly having at least a first filling tube for feeding the filling material into the tubular packaging casing stored on the filling tube and closed at its first end, at least a first casing brake assembly, associated with the first filling tube, for applying a braking force to the tubular packaging casing while being pulled-off from the first filling tube, and a control unit for controlling at least the clipping machine, the robotic device includes: a gripper unit for gripping a tubular packaging casing supply provided by the storage device, and for transferring said tubular packaging casing supply onto the at least first filling tube of the clipping machine; the storage device includes: at least a first storage assembly in which at least one tubular packaging casing supply is provided for being transferred by the robotic device onto the at least first filling tube of the clipping machine.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the gripper unit relative to the storage device and/or the position of the gripper unit relative to the first and/or second filling tube arranged in the refill position.

Preferably, the robotic device includes a second sensor unit for determining a gripping force applied to the tubular packaging casing supply by the gripper unit.

Preferably, the storage device includes at least a third sensor unit for detecting the presence or absence of a tubular packaging casing supply in the storage device.

Preferably, the system further includes a hanging line arranged downstream the discharge device, for suspending the sausage-shaped products discharged from the clipping machine by the discharge device onto a rod-like element, like a smoking rod, the hanging line includes a control unit for controlling at least the hanging line.

Preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

There is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least fist filling tube, and transferring by the robotic device a tubular packaging casing supply provided by a storage device onto the at least first filling tube being arranged in the refill position.

Preferably, the method further comprises the step of suspending the sausage-shaped product discharged by the discharge device on a rod-like element provided by the hanging line.

Preferably, the method further comprises the step of least partially controlling by the clipping machine the robotic device and/or the hanging line.

The inventive robotic device thereby provides all advantages as explained in conjunction with the inventive method for controlling a robotic device.

In the drawings:
- Fig. 1:: is a schematic view showing the principal design of a clipping machine for producing sausage-shaped products;
- Fig. 2:: is a perspective view to the front side of a system according to the present invention for producing sausage-shaped products, comprising a clipping machine as in Fig. 1, a robotic device shown in a pick-up position, and a storage device;
- Fig. 3:: is a plan view of the system according to Fig. 2;
- Fig. 4:: is a perspective view to the rear side of the system according to Fig. 2, with the robotic device in the pick-up position;
- Fig. 5:: is a perspective view to the rear side of the system according to Fig. 2, with the robotic device in an allocation position;
- Fig. 6:: is a perspective view to the rear side of the system according to Fig. 2, with a gripper unit of the robotic device being coaxially arranged to a filling tube of the clipping machine;
- Fig. 7:: is a perspective view to the rear side of the system according to Fig. 2, with the gripper unit of the robotic device in the release position;
- Fig. 8:: is a perspective view to the gripper unit of the robotic device in the opened position;
- Fig. 9:: is a perspective view to the gripper unit according to Fig. 8 in the closed position;
- Fig. 10:: is a perspective front view of the system according to the present invention, comprising a second embodiment of storage device;
- Fig. 11:: is a perspective view of the main components of a hanging line used in the system according to the present invention; and
- Fig. 12: is a detailed perspective view to a further embodiment of the clipping machine of the system according to the present invention.

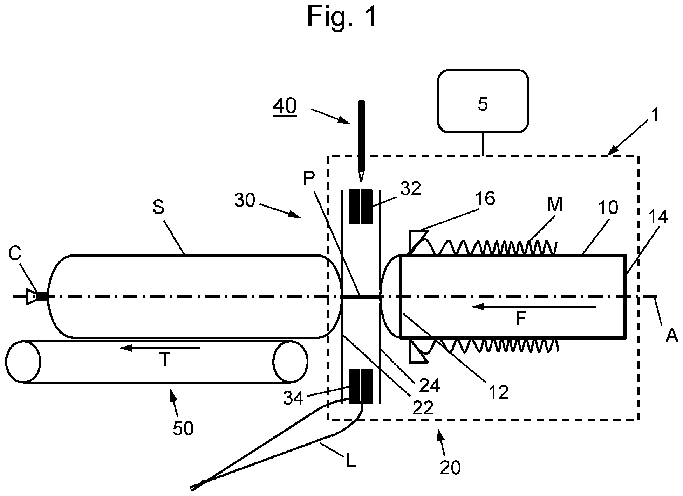

A clipping machine 1 for producing sausage-shaped products S, like sausages, which contain a flowable filling material in a tubular packaging casing supply M, is shown schematically in Fig. 1. Clipping machine 1 comprises a filling tube 10 with a longitudinally and horizontally extending central axis A, having at its left end 12 a discharge opening for discharging the filling material and at its right end 14 a feeding opening for feeding the filling material into filling tube 10 in a feeding direction F to the discharge opening of filling tube 10, for example by a feeding pump of a filler. Moreover, a casing brake assembly 16 is arranged on and coaxially with filling tube 10 in the region of left end 12 of filling tube 10. Filling tube 10 is made of a suitable material, like stainless steel.

A tubular packaging casing supply M made of a thin sheet material is stored on filling tube 10 in a folded and shirred manner like a concertina. From tubular packaging casing supply M, tubular packaging casing material is pulled-off during the process of producing sausage-shaped products S, in particular by the feeding pressure, as the filling material is filled into tubular packaging casing M. Casing brake assembly 16 provides a braking force for allowing a controlled pulling-off of tubular packaging casing M during the filling process.

Clipping machine 1 further comprises gathering means 20 for gathering a filled tubular packaging casing M and forming a plait-like portion P thereto, and a clipping device 30 for closing the filled portion of tubular packaging casing M by applying closure means, like closure clips C, to plait-like portion P. These components are all arranged downstream filling tube 10.

As can be inferred from Fig. 1, clipping device 30 is positioned immediately downstream left end 12 of filling tube 10, and coaxially aligned to filling tube 10. Clipping device 30 comprises a first and a second clipping tool 32, 34 formed by a punch 32 and a die 34. It has to be noted that punch 32 and die 34 may apply and close a single closure clip C for closing just filled tubular packaging casing M, or may apply and close two closure clips C at the same time, a first closure clip C for closing the rear end of just filled tubular packaging casing M for forming a sausage-shaped product S, and a second closure clip C for closing the front end of a tubular packaging casing M subsequently to be filled.

Gathering means 20 include a first displacer unit 22 and a second displacer unit 24, wherein first displacer unit 22 is positioned downstream second displacer unit 34. First and second clipping tools 32, 34 of clipping device 30 may be positioned between first and second displacer units 22, 24, at least for applying and closing one or two closure clips C to plait-like portion P. First displacer unit 22 can reversibly be moved parallel to feeding direction F of the filling material, for forming plait-like portion P of a desired length.

If it is intended to store sausage-shaped products S on a rod-like element, like a smoking rod, e.g. for further processing, like cooking or smoking, a suspension element L, like a suspension loop, may be provided and attached to one end of each of sausage-shaped products S, or at one end of a chain of sausage-shaped products S. Suspension element L may be fed to one of closing tools 32, 34, and may be fixed to the respective end of sausage-shaped product S by means of closure clip C that closes said end of sausage-shaped product S.

For separating a sausage-shaped product S just produced from the remaining tubular packaging casing supply M stored on filling tube 10, a cutting device 40 may be provided. Said cutting device 40 cuts tubular packaging casing M upstream closure clip C that closes the just filled portion of tubular packaging casing M. In case that two closure clips C have been applied to plait-like portion P by clipping device 30, cutting device 40 cuts plait-like portion P between said two closure clips C.

For discharging a sausage-shaped product S just produced from clipping machine 1 in a transportation direction T being at least substantially the same as feeding direction F, a discharge device 50 is arranged downstream clipping device 30, which may be a belt conveyor comprising a conveyor belt and guide rollers.

For storing sausage-shaped products S on a rod-like element, suspension element L is caught by a catching device (not shown), like a catching needle, which guides suspension element L towards the rod-like element.

Clipping machine 1 further comprises a control unit 5 for controlling clipping machine 1, and particularly, the components of clipping machine 1, like first and second clipping tool 32, 34 of clipping device 30, and first and second displacer unit 22, 24 of gathering means 20.

Control unit 5 may also control additional components or machines, which are not part of clipping machine 1, but being involved in the production process. In particular, control unit 5 may control the drive units of said additional components or machines, like a metal detector, which may be provided in the region of filling tube 10, for detecting metal parts in the filling material while fed into tubular packaging casing M, a label feeding device for feeding labels to clipping device 30 for attaching labels to the sausage-shaped product S, a filler for feeding filling material through filling tube 10 of clipping machine 1, or a hanging line for suspending the sausage-shaped products S produced by clipping machine 1 on a rod-like element. These and other additional components and machines may be coupled to control unit CU and controlled by control unit CU, at least partially, e.g. to be adjusted to each other and/or to the kind of sausage-shaped product S to be produced by clipping machine CM.

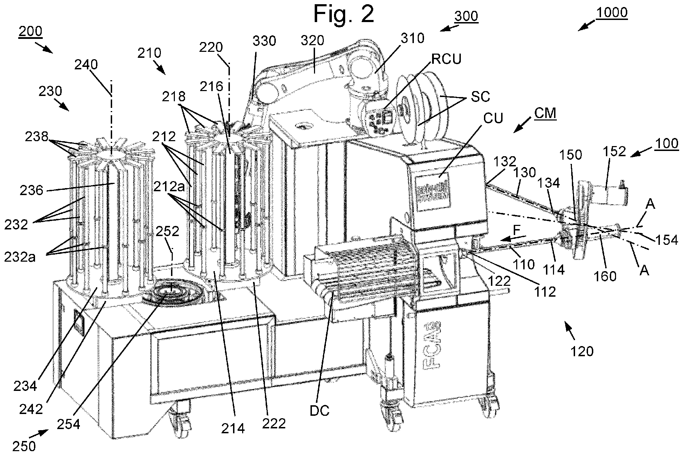

Fig. 2 shows a perspective view to the front side of a system 1000 for producing sausage-shaped products S, which includes a clipping machine CM. Clipping machine CM according to Fig. 2 includes a clipping device and gathering means, both as explained in conjunction with Fig. 1, a discharge device DC and a filling tube assembly 100. Clipping machine CM of system 1000 is in principle constructed and operates in the same way as clipping machine 1 described above in connection with Fig. 1. A difference between clipping machine CM of system 1000 and clipping machine 1 described in connection with Fig. 1 is that clipping machine CM operates not only with one filling tube 10, but several filling tubes 110, 130, held on filling tube assembly 100, as will be explained in more detail below.

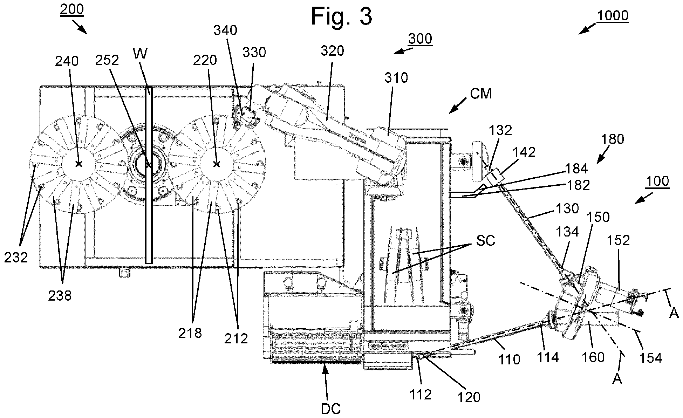

Filling tube assembly 100 comprises a first filling tube 110 having a first end 112 and a second end 114, a first casing brake assembly 120 associated with first filling tube 110, a second filling tube 130 having a first end 132 and a second end 134, and a second casing brake assembly 140 (cf. Fig. 3) associated with second filling tube 130. First and second filling tubes 110, 130 are pivotally coupled to a revolver plate 150 by their second ends 114, 134 via a respective hinge.

First filling tube 110 faces with its first end 112 towards the closing region of clipping machine CM, in which clipping device and gathering means are arranged, and in filling direction F. In the arrangement of Fig. 2, first filling tube 110 is in the filling position.

Second filling tube 130 faces with its first end 132 to the rear side of clipping machine CM. Second filling tube 130 is in the refill opposition, in which tubular packaging casing supply M may be arranged or put on second filling tube 130.

First casing brake assembly 120 includes a casing brake unit 122 positioned in the region of first end 112 of first filling tube 110. A casing brake holder unit (not shown) is designed such that casing brake unit 122 when in the filling position as shown in Fig. 2, is held in position at first end 112 and secured against unintentional shifting along first filling tube 110, particularly, by the feeding pressure of the filling material or the pull-off force from the tubular casing material acting on casing brake unit 122. First casing brake holder may have the form of a fork into which first casing brake unit 122 engages when in the filling position. Alternatively, an elastic element, like a spring, or any other suitable holding or retaining element may be provided, for securing first casing brake unit 122 in its position on first filling tube 110 may be provided.

Second casing brake assembly 140 includes a second casing brake unit 142 positioned in the region of first end 132 of second filling tube 130. It has to be understood that the casing brake holder also secures casing brake unit 142 of second casing brake assembly 140 against unintentional shifting along second filling tube 130 when in the filling position.

The pivot movement of filling tubes 110, 130 and casing brake assemblies 120, 140 is executed in a common plane, which is at least approximately horizontally with respect to clipping machine CM.

Filling tube assembly 100 further includes a drive device 152 including a motor, preferably an electric motor and a suitable transmission or gear unit for rotating revolver plate 150 about a rotation axis 154. Rotation axis 154 and filling tubes 110, 130 are arranged in a common plane that is aligned at least approximately horizontally, when one of filling tubes 110; 130 is in the refill position and the respective other filling tube 130; 110 is in the filling position.

First filling tube 110 may pivoted laterally outwardly in the common plane of rotary axis 154, from the filling position as shown in Fig. 2, into a lateral position as indicated in Fig. 3. In these positions, filling tubes 110, 130 are arranged at least approximately equiangular to rotation axis 154. Rotation axis 154 includes an acute angle with filling tube axis A, as can be seen in Figs. 2, 3.

As explained in conjunction with the principal design of clipping machine 1 shown in Fig. 1, tubular packaging casing supply M is made of a thin sheet of tubular material that is folded and shirred, like a concertina. Tubular packaging casing supply M thereby forms a hollow stick of folded and shirred tubular casing material, which may be transferred from a storage device 200 described below, onto filling tube 110, 130. Tubular packaging casing supply M is preferably closed at one end by a closure clip C, which forms the front end of the first sausage-shaped product S to be produced with this tubular packaging casing supply M. However, it is also possible that a closure clip C, which forms the front end of the first sausage-shaped product S to be produced, is applied to the front end of tubular packaging casing supply M by the clipping device of clipping machine CM, immediately before starting the filling process. For handling tubular packaging casing supply M, it may be of advantage that said tubular packaging casing supply M has an inherent stability that is sufficient for transferring tubular packaging casing supply M at least from a storage device onto filling tube 110, 130 of clipping machine CM.

System 1000 for producing sausage-shaped products S further comprises a storage device 200 for storing at least one, preferably a plurality of tubular packaging casing supplies M to be loaded onto filling tube 110, 130 when arranged in the refill position.

Storage device 200 according to the embodiment shown in Fig. 2 comprises a first storage assembly 210 and a second storage assembly 230. First storage assembly 210 includes a plurality of vertically arranged receiving pins or mandrels 212 of equal length, that are fixed on the upper side of a circular rotation plate 214 by their lower ends, and on a circle concentrically to the center of rotation plate 214. A central post 216 is mounted to rotation plate 214 with its lower end, and is coaxially aligned to a rotation axis 220 of rotation plate 214. Rotation axis 220 extends vertically to rotation plate 214 and through its center.

Each mandrel or receiving pin 212 of first storage assembly 210 is provided with a supporting element 212a in the form of a collar, which are arranged in the region of the lower end of receiving pin 212 (cf. Fig. 2). Said supporting element provides support for a tubular packaging casing supply M arranged on mandrel or receiving pin 212, and which rests with its lower end on supporting element 212a. Supporting elements 212a may be detachably mounted to receiving pins 212, for adapting first storage assembly 210, and particularly the receiving area of receiving pins 212, to the length of tubular packaging casing supplies M, the position of supporting elements 212a such that the upper end of a tubular packaging casing supply coincides with the upper end of the respective receiving pin 212.

At the upper end of central post 216, retaining elements 218 are arranged. Retaining elements 218 are made of an elastic material, like rubber, have an approximately rectangular shape and extend radially outwardly from central post 216 towards the upper ends of receiving pins 212, such that their outer ends are laid up with pretension on the upper ends of receiving pins 212. Storage device 210 further includes a rotary drive 222 coupled to the lower side of rotation plate 214, for rotating first storage assembly 210 about rotation axis 220.

Second storage assembly 230 is at least approximately identically in design like first storage assembly 210, and includes a rotation plate 234 with a vertical rotation axis 240 and a plurality of receiving pins or mandrels 232 arranged vertically with their lower ends to rotation plate 234, and on a circle concentrically to the center of rotation plate 234. A central post 236 is arranged at the center of rotation plate 234 and coaxially aligned to rotation axis 240 of rotation plate 234 and through its center. At the upper end of central post 236, retaining elements 238 are arranged. Retaining elements 238 that are also made of an elastic material, like rubber, have a rectangular shape, extend radially outwardly towards the upper ends of receiving pins 312 and are laid up with pretension on the upper ends of receiving pins 312. Second storage assembly 230 is rotatable about rotation axis 240 by a rotary drive 342 mounted to the lower side of rotation plate 234.

Mandrels or receiving pins 232 of second storage assembly 230 are also provided with support elements 232a, which are arranged in the region of the lower end of receiving pin 232, for supporting a tubular packaging casing supply M arranged on said mandrel or receiving pin 232. Supporting elements 232 of second storage device are identical in design and function like supporting elements 212a of first storage device 210.

In Fig. 2, first storage assembly 210 is positioned in an unloading position or a delivery position, in which tubular packaging casing supply M is unloaded from first storage assembly 210, or picked up, by a robotic device 300 to be transferred onto second filling tube 130 in the refill position, and second storage assembly 230 is in a loading position or feeding position, in which tubular packaging casing supply M is loaded onto storage assembly 230, e.g. by a further robotic device or an operator, which arranges new tubular packaging casing supply M on receiving pins or mandrels 232 of second storage assembly 230.

Storage device 200 further includes a rotation assembly 250, or revolver carrier means, for rotating first and second storage assemblies 210, 230 about a rotation axis 252, or the revolver axis. First and second storage assemblies 210, 230 are mounted on a common rotation table (not shown in Fig. 2) on the same height and with rotation axes 220, 240 are aligned parallel to each other. The rotation table of the revolver carrier means or rotation assembly 250 is rotated about rotation axis or revolver axis 252 by a rotation mechanism 254 arranged below the rotation table.

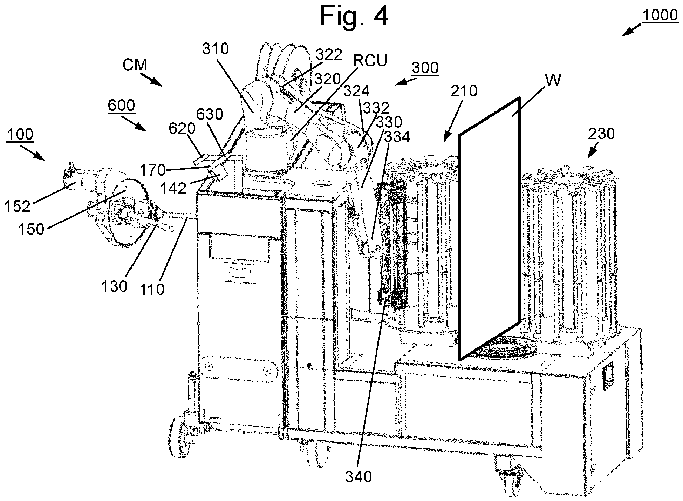

For safety reasons, cage elements, like a partition wall W (cf. Figs 3 and 4) may be provided between first and second storage assemblies 210, 230, which not only separates first storage assembly 210 from second storage assembly 230, but also encloses the maximum radius that can be reached by robotic device 300. This may allow, for example, an operator to load second storage assembly 230 with new tubular packaging casing supplies M while a robotic device 300 removes a tubular packaging casing supply M from first storage assembly 210 and loads it into second filling tube 130, which is in the refill position.

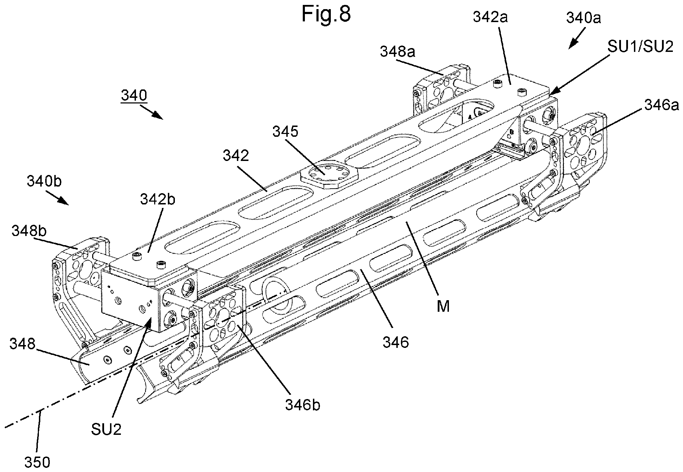

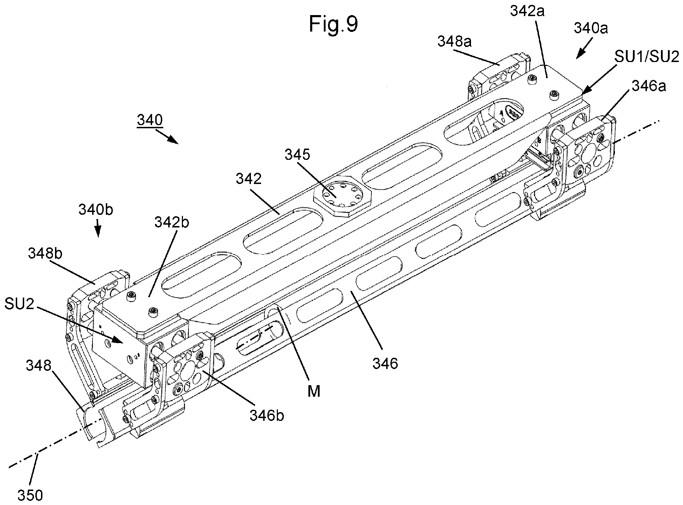

System 1000 for producing sausage-shaped products S further comprises a robotic device 300. Robotic device 300 has a base 310, a first arm 320 having a first end 322 and a second end 324, pivotally coupled to base 310 by its first end 322, and a second arm 330 with a first end 332 and a second end 334. Second arm 330 is pivotally coupled to second end 324 of first arm 320 by its first end 332. Further, robotic device 300 includes a first gripper unit 340, which will be discussed in more detail below in connection with Figs. 8 and 9.

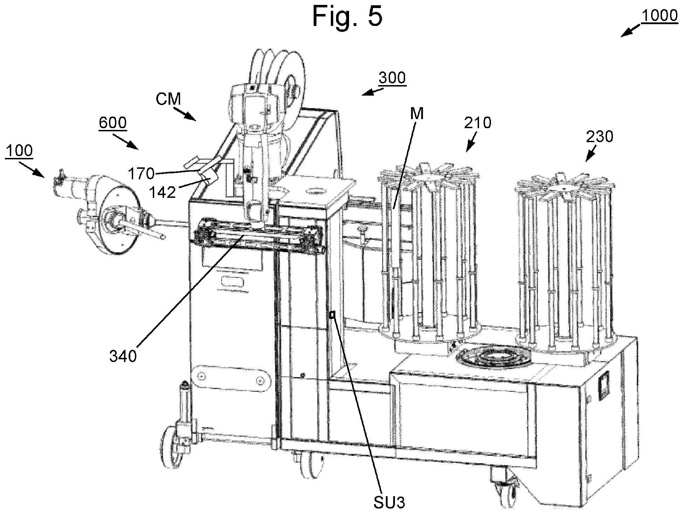

First gripper unit 340 for gripping tubular packaging casing supply M arranged on receiving pin 212 in the take-up position (cf. Figs 4 and 5) is mounted at second end 334 of second arm 330. In the shown embodiment, robotic device 300 further comprises a control unit RCU for controlling the movement of robotic device 300. Control unit RCU is mounted to base 310 of robotic device 300. Robotic device 300 is mounted to the framework of clipping machine CM by base 310. Alternatively, a separate base for robotic device 300 may be provided, which is arranged in a defined position relative to clipping machine CM, or which is fixedly coupled to the frame work of clipping machine CM.

In principle, it is also possible for control unit CU of clipping machine CM to control robot device 300 so that control unit RCU can be omitted.

Fig. 3 is a plan view of a system 1000 according to Fig. 2. As can be seen in Fig. 3, first filling tube 110 is in the lateral position, in which first end 112 of first filling tube 110 faces laterally away from clipping machine CM. First casing brake assembly 120 is in a position, in which casing brake unit 122 is arranged on first end 112 of first filling tube 110.

In contrast, second filling tube 130 is in the refilling position and casing brake unit 142 of second casing brake assembly 140 is arranged on first end 132 of second filling tube 130.

In Fig. 3, a retainer device 180 is schematically shown, which is arranged at the right side of clipping machine CM and which generally extends towards second filling tube 130 in the refill position. Retainer device 180 has a base segment 182 by means of which retainer device 180 is attached to clipping machine CM or a suitable frame element, and a movable arm element 184, which may be moved towards filling tube 130 in the refill position, e.g. pivoted, by a respective drive, such that the outer end of movable arm element 184 abuts second filling tube 130 in the refill position. The free end of movable arm element 184 may be provided with an abutment element, like a fork, and/or may be made of a soft material, like rubber. Retainer device 180, and particularly, movable arm element 184 is moved towards filling tube 130 when in the refill position, immediately after a tubular packaging casing supply M has been transferred onto second filling tube 130 and prior first gripper unit 340 releases tubular packaging casing supply onto second filling tube 130. Retainer device 180 thereby secures tubular packaging casing supply M on second filling tube 130 in the refill position, and prevents tubular packaging casing supply M from unfolding or falling off from second filling tube 130, at least until casing brake unit 142 has been shifted onto second filling tube 130.

As further can be seen in Fig. 3, retaining elements 218, 238 of first and second storage assemblies 210, 230 are arranged such that their outer end portions cover approximately half of the cross section of receiving pins 212, 232. This enables securing tubular packaging casing supplies M on receiving pins 212, 232 against unintentional unfolding or extending over the top ends of receiving pins 212, 232, and further reduces the resistance of tubular packaging casing supplies M against unshifting from receiving pins 212, 232 by robotic device 300.

Second arm element 184 or a corresponding element may also include a linear drive for being linearly moved towards second filling tube 130 in the refill position.

Fig. 4 is a perspective view to the rear side of system 1000 according to Fig. 2. Robotic device 300 is in the take-up or pick-up position. In this position, a tubular packaging casing supply M that is stored on a receiving pin 212 of first storage assembly 210. Said receiving pin 212 is in a provision position corresponding to the take-up position of robotic device 300, and particularly of gripper unit 340, such that first gripper unit 340 may grasp tubular packaging casing supply M stored on receiving pin 212.

As it can be seen in Fig. 4, system 1000 further includes a receiving device 600 for receiving either first gripper unit 340 or a second gripper unit 170 for gripping one of casing brake units 122, 142 of first or second casing brake assemblies 120, 140. In Fig. 4, second gripper unit 142 gripped by second gripper unit 170 is received by receiving device 600. For receiving or accommodating first and /or second gripper units 340, 170, receiving device 600 is provided with a first holding unit 620 and a second holding unit 630. First holding unit 620 is provided for holding and securing first gripper unit 340 in receiving device 600, and second holding unit holds and secures second gripper unit 170 (cf. Fig. 4) in receiving device 600.

For holding and securing first and second gripper units 340, 170 in receiving device 600, holding units 620, 630 may include suitable for-fit or force-fit elements or assemblies, like magnetic elements, tongue-and-groove joints or clamping elements for securing first and second gripper units in the receiving device, or combinations thereof.

Furthermore, for enabling robotic device 300 to exchange first and second gripper units 340, 170, gripper units 340, 170 may reversibly be coupled to second end 334 of second arm 330 of robotic device 300 by a respective coupling mechanism. Said coupling mechanism may include a bayonet joint, which provides a mechanical connection between the robotic device and the first and second gripper units as well as a fluid connection, for connecting the drive devices of the gripper units with respective fluid sources. The coupling mechanism may also provide electric connections, like sensor connections or, if present, electric connections for possible electric drive devices.

Receiving device 600 may be provided with a sensor arrangement (not shown), that may detect the presence or absence of first and/or second gripper units 340, 170 in first and second holding units 620, 630. The signal from this sensor arrangement may be used for controlling at least robotic device 300. Robotic device 300 may e.g. be stopped in case that both gripper units are placed in receiving device 600, or in case that no gripper unit 340, 170 is placed in receiving device 600. Furthermore, it is also possible that the sensor arrangement is able to detect whether the first or the second gripper unit 340, 170 is received by receiving device 600, and put out a respective signal whether the incorrect gripper unit is in the receiving device.

As further can be seen in Fig. 4, a partition wall W is arranged between first and second storage assemblies 210, 230, for separating the operation range of robotic device 300, in which first storage device 210 is arranged while robotic device takes up tubular packaging casing supply M therefrom, from an operation range of an operator or a further robotic device, in which tubular packaging casing supply M is refilled onto receiving pins 232 of second storage assembly 230.

Partition wall W may be a solid wall element. Alternatively, partition wall may be realizes by a sensor arrangement that creates a so called light curtain or light screen, which may detect a person or an element extending there through, and which may than output a respective signal to system 1000 or control unit of clipping machine CM or control unit RCU of robotic device 300, such that the system 1000 or components thereof, like robotic device 300, may be stopped. Partition wall W is arranged on the common rotation table of first and second storage assemblies 21, 230, such that it rotates together with first and second storage assemblies 210, 230.

Fig.5 shows robotic device 300 with first gripper unit 340 in an allocation position. In this position, tubular packaging casing supply M is removed from first storage assembly 210 and held by robotic device 300 approximately horizontally and centrally behind clipping machine CM, to be transferred next onto second filling tube 130 being arranged in the refill position. Furthermore, first storage assembly 210 has been rotated about rotation axis 220 and about a predefined angle, such that a further receiving pin 212 is in the provision position, with a further tubular packaging casing supply M next to be removed therefrom by robotic device 300.

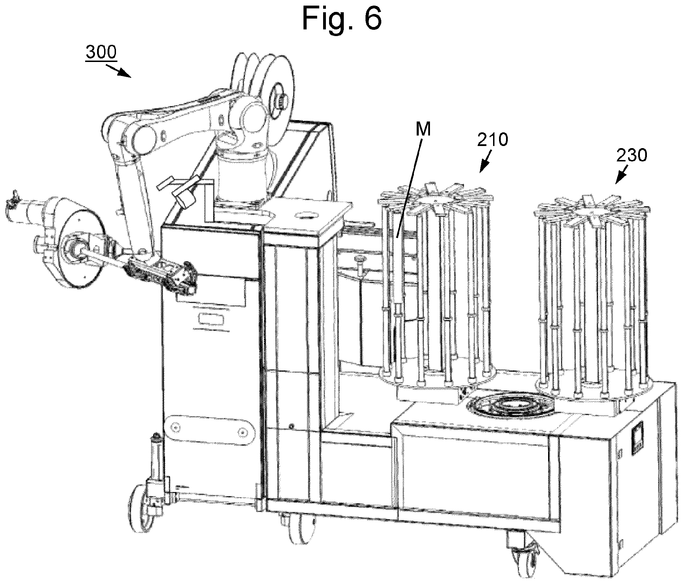

Fig. 6 is a perspective view to the rear side of the system 1000 with first gripper unit 340 of robotic device 300 being coaxially arranged to central axis A of second filling tube 130 in the refill position, and onto which tubular packaging casing supply M has to be transferred.

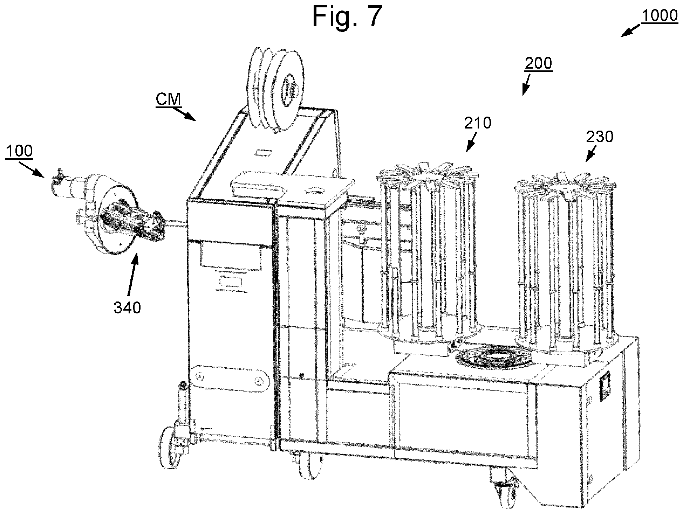

Fig. 7 shows a perspective view to the rear side of the system 1000, and particularly, gripper unit 340 for robotic device 300 in the release position, in which tubular packaging casing supply M is positioned on second filling tube 130 by gripper unit 340. For clarity reasons, in Fig. 7, only gripper unit 340 of robotic device 300 is shown.

From the position shown in Fig. 6, tubular packaging casing supply M is moved linearly along central axis A of second filling tube 130 and shifted thereon by robotic device 300, which thereby moves into the release position shown in Fig. 7. In the release position, gripper unit 340 is activated to move from its closed position (cf. Fig. 9) in which tubular packaging casing supply M is grasped, into its opened position (cf. Fig. 8), for releasing tubular packaging casing supply M onto second filling tube 130.

Fig. 8 is a perspective view to gripper unit 640 of robotic device 300 in the opened position.

Gripper unit 340 has a first end 340a and a second end 340b. Gripper unit 340 comprises a longitudinally extending, essentially rectangular base structure or base plate 342 with a first end 342a that coincides with first end 340a of gripper unit 340, and a second end 342b that coincides with second end 340b of gripper unit 340. On the lower side of the base structure or base plate 342 (according to Fig. 8), and in the regions of its first end 342a, a first drive assembly 343 is arranged that includes two piston/cylinder drives with the pistons extending in a plane parallel to the plane of base plate 342 and at least approximately vertical to its longitudinal extension. A second drive assembly 344, which is identically designed to first drive assembly 343, is mounted to base plate 342 in the regions of its second end 342b, and with the pistons of the piston/cylinder drives extending at least approximately vertical to the longitudinal extension of base plate 340 and in the same plane as the pistons of first drive assembly 343. At the outer ends of the pistons of the piston/cylinder drives of first and second drive assemblies 343, 344, brackets 346a, 346b, 348a, 348b are mounted. Brackets 346a, 346b, 348a, 348b are angled and fixed with one end to the pistons of the piston/cylinder drives such that their other ends face downwards from base plate 342, and brackets 346a, 348a; 346b, 348b at first and second ends 342a, 342b of base plate 342 are directed to each other.

Gripper unit 340 is provided with a first gripper element 346 and a second gripper element 348, each in the form of an angled bar having a V-shaped cross section and a length corresponding to the length of base plate 342. First and second gripper elements 346, 348 are mounted to brackets 346a, 348a; 346b, 348b such that they are aligned parallel to each other and with the open side of the "V" facing to each other. First and second gripper elements 346, 348 may reversibly be moved by first and second drive assemblies 343, 344 between an opened position, as shown in Fig. 8, and a closed position, as shown in Fig. 9. First and second gripper elements 346, 348 are aligned parallel and equidistant to a central axis or gripping axis 350 there between. In the closed position, a tubular packaging casing supply M is grasped by first and second gripper elements 346, 348, and held coaxially to gripping axis 350.

First and second gripper elements 346, 348 are reversibly moved between the opened position and the closed position by first and second drive assemblies 343, 344, which include piston/cylinder drives. The pistons of said piston/cylinder drives do not only drive first and second gripper elements 346, 348, but do also provide linear guidance or linear support, such that the alignment of first and second gripper elements 346, 348 is maintained during the whole process.

As further can be seen in Figs. 8 and 9, at the upper side of base plate 342 and approximately centrally thereon, a connecting unit 345 is arranged, for connecting gripper unit 340 to second end 334 of second arm 330 of robotic device 300. At second end 334 of second arm 330 of robotic device 300, a corresponding connecting unit is arranged, for establishing at least a mechanical connection between second arm 330 and gripper unit 330. Additionally, it is also possible the said connection units enable electrical and/or pneumatic/hydraulic connections to sensor units SU1/SU2, which will be explained in detail below, or first and second drive assemblies 343, 344, respectively.

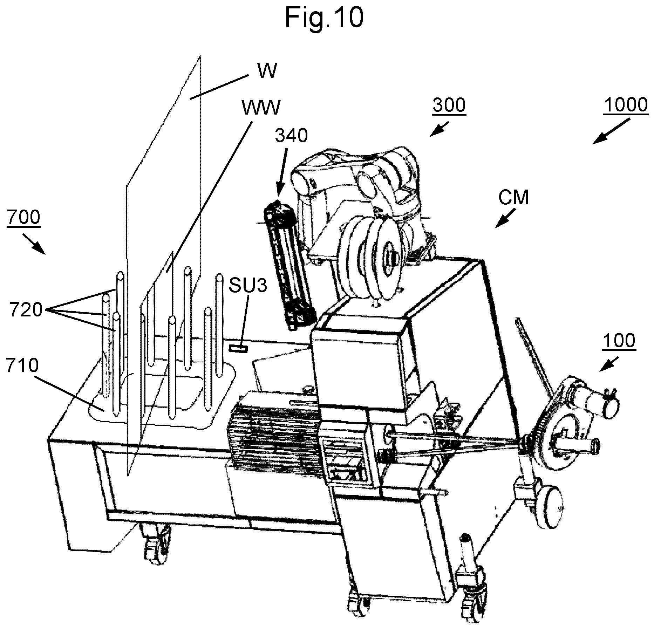

Fig. 10 is a perspective front view of system 1000 according to the present invention, comprising a second embodiment of storage device 200.

System 100 according to Fig. 10 is of similar design as system 100 of Figs. 2 to 7, and differs only in the design of storage device 700.

The second embodiment of storage device 700 is arranged at a table 710 formed by a plane of the frame of system 100 and replaces storage device 200.

Storage device 700 comprises a conveyor 710 for holding at least one mandrel or receiving pin 720, wherein the conveyor 710 conveys the at least one mandrel or receiving pin 720 from a provision position, which is the same position as the provision position explained in conjunction with storage device 200, to a loading position arranged at least approximately opposite to the provision position. Conveyor 710 includes an at least approximately horizontally circulating conveyor belt 712 driven by a motor (not shown), wherein conveyor belt 712 is arranged in an approximately oval configuration.

Also storage device 700 includes a separating wall partition wall W, which is arranged between the provision position and the loading position of storage device 700. Partition wall thereby separates the operation range of robotic device 300 from the operation range of an operator or a further robotic device.

For enabling passage of receiving pins 720, partition wall W has at least one window WW, the size of which corresponds to the space needed for conveyor 710 and mandrels or receiving pins 72 to pass there through. It has to be noted that more than one window WW may be provided in partition wall W. Two windows WW may be provided such that each conveyor run, the forward run moving towards the provision position, and the back run moving backwards to the loading position, has its own window WW, whereby the total open surface in partition wall W may be reduced.

System 1000 according to the present invention may further include a hanging line HL for suspending sausage-shaped products S produced in clipping machine CM and discharged from clipping machine CM by discharge device DC, on a rod-like element R, like a smoking rod.

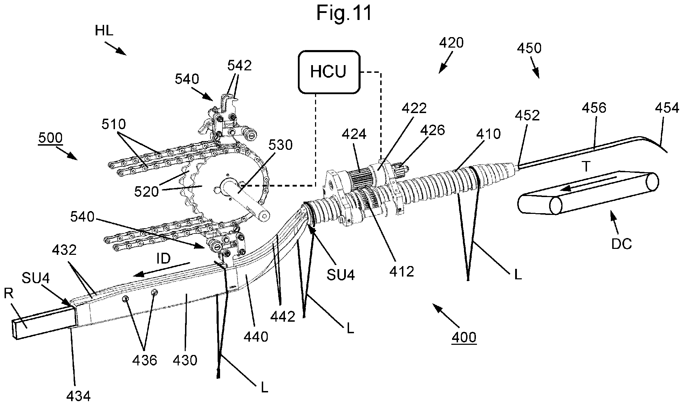

Fig. 11 is a perspective view of the main components of hanging line HL. Hanging line HL includes amongst others, a control unit HCU, an infeed device 400 and a transport device 500. In Fig. 11, only the conveyor unit of discharge device DC is shown which, in this case, is a belt conveyor for conveying sausage-shaped products S out of clipping machine CM.

Infeed device 400 includes an actively driven infeed conveyor in the form a spindle 410 with an outer surface at least similar to a screw thread that is supported by a spindle bearing 420, a guide bar 430 and a connecting element 440 connecting the downstream end of spindle 410 with the upstream end of guide bar 430. Connecting element 440 has the shape of a segment of a circle, at least at its upper surface.

The upstream end of connecting element 440 has an approximately circular cross-section adapted to the cross-section of screwed spindle 410, to allow a sliding transfer of a suspension element L from screwed spindle 410 onto connecting element 440. The downstream end of connecting element 440 has an at least approximately rectangular shape adapted to the cross-sectional shape of guide bar 430.

In the upper surface of connecting element 440, two parallel grooves 442 are arranged, which extend in an infeed direction ID. Also, in the upper surface of guide bar 430, two parallel grooves 432 are arranged, which extend in infeed direction ID, and which are aligned with grooves 442 in connecting element 440.

A portion of screwed spindle 410 has a toothed surface 412 which is engaged by a toothed portion 424 of a support roller 422 of spindle bearing 420. At a free end of support roller 422, a toothed wheel 426 is arranged, via which support roller 422 may be rotated, for driving screwed spindle 410 at a desired speed. As a drive for infeed device 400, an electric motor or the like may be provided.

For supporting guide bar 430, holes 436 are provided in both side surfaces of guide bar 430, into which indexing pins of an indexing device may engage. At its upstream end, guide bar 430 is fixedly coupled to connecting element 440. The upstream end of connecting element 440 is radially supported by screwed spindle 410. Connecting element 440 has an engaging element, like a pin, at its upstream end that extends into the downstream end of spindle 410, in which it is rotatably supported, e.g. in a roller bearing, for enabling a rotational movement of screwed spindle 410 relative to connecting element 440. Pairs of oppositely arranged indexing pins which may engage holes 436 in guide bar 430, provide radial and rotational support for guide bar 430, and enable passage of suspension elements L along guide bar 430, by pairwise alternatingly engaging and disengaging holes 436 in guide bar 430.

A support element 434 extends from the downstream end guide bar 430, for supporting a rod-like element R to be loaded with sausage-shaped products S. The other end of rod-like element R (not shown) is also supported so that rod-like element R is held horizontally aligned at its two ends during loading sausage-shaped products S thereon. A suspension element L guided along guide bar 430 may thereby be transferred onto said rod-like element R. The upstream end of rod-like element R is supported on support element 434, such that rod-like element R in the loading position shown in Fig. 11, and guide bar 430 are arranged approximately coaxially.

In Fig. 11, for clarity reasons, only an upstream portion of rod-like element R and the suspension elements L of the sausage-shaped products S are shown, with the suspension elements L representing the sausage-shaped products S to be transported along infeed device 400.

As further shown in Fig. 11, a longitudinally extending catching device 450, like a catching needle, is attached to the upstream end of spindle 410 and extends coaxially thereto into the counter direction of infeed direction ID and along discharge device DC. Catching device 450 has a first end 452, with which catching device 450 is mounted to spindle 410, and a second end 454, which extends into the closing region of clipping machine CM for catching suspension element L of sausage-shaped product S just produced, and a central portion 456 extending between first and second ends 452, 454. Second end 454 is curved downwardly into the closing region of clipping machine CM. Central portion 456 of catching device 450 is a straight portion and is aligned at least approximately parallel to transportation direction T of the conveyor unit of discharge device DC. A suspension element L caught by catching device 450 is guided by catching device 450 to spindle 410 while the body of sausage-shaped product S laying on the conveyor unit of discharge device DC, is conveyed out of clipping machine CM.

A further component of hanging line HL is transport device 500 for transporting the sausage-shaped products S fed into hanging line HL by infeed device 400, along guide bar 430 and rod-like element R, and for placing said sausage-shaped products S on rod-like element R.

Transport device 500 is arranged vertically above guide bar 430 and rod-like element R in the loading position and extends in infeed direction ID. Transport device 500 according to Fig. 11 is embodied as a chain conveyor forming the conveyor means having two endless conveyor chains 510 which are arranged parallel to each other, and with each conveyor chain 510 being wound about a first and a second deflection roller 520. In Fig. 2, only first deflection rollers 520 are shown which are arranged on a common axle 530. First deflection rollers 520 form the upstream end of horizontally arranged transport device 500. The (not shown) downstream end of transport device 500 is of identical constitution, and includes two second deflection rollers about which conveyor chains 510 are wound, and which are also arranged on a common axle.

Transport device 500, and particularly conveyor chains 510 are actively driven by one of its common axles 530 of the deflection rollers 520 via, for example, an electric motor. Transport device 500 is driven such that the lower run of conveyor chains 510 moves in infeed direction ID.

Transportation elements 540 are arranged in regular intervals on conveyor chains 510. Each transportation element 540 includes a pair of hooks 542, with each hook 542 engaging one of grooves 432, 442 of guide bar 430 and connecting element 440 for engaging a suspension element L of a sausage-shaped product S to be suspended on a rod-like element R.

Hanging line HL according to Fig. 11 is further provided with a fourth sensor unit SU4 arranged in the region of support element 434. In Fig. 11, only possible positions of fourth sensor unit SU4 are indicated.

Fourth sensor unit SU4 may detect the presence or absence of a rod-like element R in the loading position. Alternatively or additionally, the same fourth sensor unit SU4, or an additional sensor unit, may also detect the presence of a sausage-shaped product S while being passed by a transportation element 540. It has to be noted that, for detecting the presence of a sausage-shaped product S at an earlier time point, fourth sensor unit SU4 may also be arranged upstream transport device 500, e.g. in the region of the downstream end of spindle 410.

Fourth sensor unit SU4 is coupled to control unit HCU, which controls the operation of hanging line HL, like the operation of infeed device 400 or transport device 500. Accordingly, based on a signal received from fourth sensor unit SU4, control unit HCU may control e.g. transport device 500, which may be stopped in the case that fourth sensor unit SU4 has detected the absence of a sausage-shaped product, or control unit HCU may control the drive device of spindle 410, e.g. such that the speed of spindle 410 is increased or decreased, in order to control the distance or time between two sausage-shaped products being transferred from spindle 410 to guide bar 430.

Furthermore, control unit HCU of hanging line HL is coupled to control unit CU of clipping machine CM. Thus, the signal from fourth sensor unit SU4 may also be send to control unit CU, such that also control unit CU of clipping machine CM may affect the operation of hanging line HL. Hanging line HL may completely be stopped by control unit CM of clipping machine CM, e.g. in case of the absence of sausage-shaped products S or rod-like elements R, or in case of any malfunction of hanging line HL. Moreover, the general operation of hanging line HL, like starting or stopping hanging line HL during the production process, may be controlled by clipping machine CM. Control unit HCU of hanging line HL may alternatively or additionally be connected to control unit RCU of robotic device 300, such that also robotic device 300 may at least partially control hanging line HL, like stopping hanging line HL when a malfunction of robotic device has been detected.

It has to be noted that at least first and second storage assemblies 210, 230, or storage device 700 respectively, may be provided with a third sensor unit SU3 in the region of their rotation plates 214, 234 or in the region of the provision position. Said sensor units SU3 may detect the presence or absence of tubular packaging casing supply M on receiving pins 212, 232,, 720 and particularly on receiving pin 212, 232, 720 that is positioned in the provision position, as well as the rotation position of first and second storage assemblies 210, 230, or the rotation position of conveyor 710. Thereby, it may be ensured that tubular packaging casing supply M is hold ready in the provision position, for being grasped by gripper unit 340 of robotic device 300, when in the take-up position. Third sensor unit SU3 may integrally be formed with central posts 216, 236, or receiving pins 212, 232, 720 and may include a respective sensor element, like a weight sensor or an optical sensor. Alternatively, third sensor unit SU3 may also be provided on clipping machine CM in close vicinity to the provision position of receiving pins 212, 232, 720, whereby only one third sensor unit SU3 is necessary, and whereby the control amount is reduced and the design of the system is less complex. Additionally, sensor unit SU3 of storage device 200 may include one sensor element, like an optical sensor, and reflectors arranged close to each storage assembly, such that sensor unit SU3 may detect the presence or absence of tubular packaging casing supply in both storage assemblies 210, 230 of storage device 200.

It has to be noted, that in the Figs. 2 to 10, only possible positions of sensor units SU1, SU2, SU3, SU4 are shown. A specific sensor element or a detailed embodiment of said sensor units SU1, SU2, SU3, SU4 is not shown, since the respective sensors may integrally be arranged in the respective units or assemblies, like in first and second drive assemblies 343, 344, in central posts 216, 236, receiving pins 212, 232 or support element 434, and thus, sensor units SU1, SU2, SU3, SU4 are not visible.

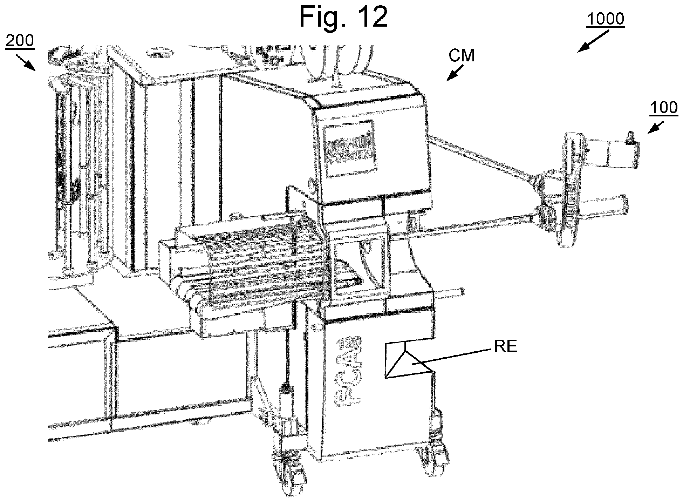

Fig. 12 is a detailed perspective view to a further embodiment of clipping machine CM of system 1000 according to the present invention.

As can be seen in Fig. 12, clipping machine CM is identical design as clipping machine CM according to Figs.2 to 6, but differs from this clipping machine in that a recess RE is provided which enables the passage of filling tubes 110, 130, and particularly their first ends 112, 132, during their movement from the lateral position into the refill position, when being rotated by revolver plate 150 of filling tube assembly 100. Recess RE is provided in the form of a cut-out in the housing of the clipping machine, in the region of the right edge of the front side of the clipping machine, below the filling tube when in the filling position.

Recess RE provides the advantage that the angle about which filling tubes 110, 130 have to be pivoted outwards into the lateral position, i.e. the angle between the filling position and the lateral position of filling tubes 110, 130, may be smaller compared with such an angle in a clipping machine, which is not provided with such a recess RE. Thereby the danger of a collision between filling tubes 110, 130 and the housing of clipping machine CM is reduced. Moreover, the reduction of the angle about which filling tubes 110, 130 have to be pivoted from the filling position into the lateral position may also reduce the necessary operation space in front of clipping machine CM.

For producing sausage-shaped products S in system 1000, tubular packaging casing M, stored on first filling tube 110 in the form of tubular packaging casing supply M and closed at its front end by a closure clip C, is filled with filling material which is fed through first filling tube 110 of filling tube assembly 100 into tubular packaging casing M in feeding direction F. Thereby, tubular packaging casing M is pulled off from first filling tube 110 by the feeding pressure of the filling material. First casing brake assembly 120 exerts a braking force onto tubular packaging casing M while being pulled off from first filling tube 110. After a predetermined portion of filling material is fed into tubular packaging casing M, filled tubular packaging casing M is gathered and a plait-like portion is formed to the gathered portion of tubular casing M by the gathering means. Two closure clips C are applied to the plait-like portion and closed by the clipping device, a first closure clip C for closing the just filled tubular packaging casing M for forming a sausage-shaped product S and a second closure clip C for closing the front end of sausage-shaped product S subsequently to be produced. A suspension element L may be provided and attached to one end of sausage-shaped product S by means of one of a closure clips C. For severing the just produced sausage-shaped product S from the remaining tubular packaging casing supply M, the plait-like portion is cut between the two closure clips C, and the sausage-shaped product S just produced may be discharged from clipping machine CM by discharge device DC in transportation direction T.

Suspension element L of sausage-shaped product S just produced, is caught by catching device DC and guided towards infeed device 400 of hanging line HL. After sausage-shaped product S, and more particular, the body of sausage-shaped product S, has left the conveyor unit of discharge device DC, sausage-shaped product S is transferred by spindle 410 of infeed device 400 via connecting element 440 to guide bar 430. At the left end of guide bare 430, suspension element L is caught by hooks 542 of one of transportation elements 540, and sausage-shaped product S is guided along guide element 430 and rod-like element R to a desired position on rod-like element R. Hooks 542 are guided in grooves 432 of guide bar 430, such that they engage suspension element L. At the desired position on rod-like element R, where sausage-shaped product S has to be placed, hooks 542 are pivoted (counter clockwise in Fig. 11) to release suspension elements L, and thus, sausage-shaped products S, on the desired position on rod-like element R. Transport device 500 thereby subsequently positions sausage-shaped products S on rod-like element R, starting from its left end towards its right end, until a predefined number of sausage-shaped products S is stored on rod-like element R, and with predefined distances there between.

After the tubular packaging casing supply M on first filling tube 110 is used up, first filling tube 110 is pivoted from the filling position (cf. Fig. 2) into the lateral position (indicated in Figs. 3 and 10). Filling tube assembly 100 is then rotated about rotation axis 154 of revolver plate 150 and about an angle of at least approximately 180°. During this rotational movement of filling tube assembly 100, first filling tube 110 is transferred into the refill position and second filling tube 130, with a tubular packaging casing supply M stored thereon, is moved into the lateral position. Thereafter, second filling tube 130 is pivoted into the filling position, second casing brake unit 142 is shifted onto first end 132 of filling tube 130, and the production of sausage-shaped products S may be continued. During the production process, a further tubular packaging casing supply M is transferred towards first filling tube 110 now in the refill position, and is stored thereon.

Refill of tubular packaging casing supply M onto second filling tube 130 arranged in the refill position, is executed by robotic device 300, which takes up a tubular packaging casing supply M from first storage assembly 210 of storage device 200, being in the unloading position, and transfers this tubular packaging casing supply M onto second filling tube 130 being arranged in the refill position.

Any position of robotic device 300, like the take-up position, the allocation position and the release position as well as the moving paths of robotic device 300 between these positions are stored in control unit RCU of robotic device 300, e.g. in the form of coordinates referring to a respective coordinate system. The moving path of robotic device 300 may be programmed by an operator and transferred to control unit RCU of robotic device 300, or may directly be programmed into control unit RCU via a respective interface. Alternatively, robotic device 300 may manually be guided by an operator along a desired moving path that in the meantime is stored in control unit RCU. In all these cases, the movement of robotic device 300 is controlled by control unit RCU. Alternatively, the positions and the moving path of robotic device 300 may be stored in control unit CU of clipping machine CM, such that control unit CU of clipping machine CM may also control the movement of robotic device 300.

For refilling tubular packaging casing supply M onto second filling tube 130 arranged in the refill position, robotic device 300, at first, removes second casing brake assembly 140, and particularly, casing brake unit 142 of second casing brake assembly 140, from second filling tube 130.

Robotic device 300, with second gripper unit 170 mounted to second end 334 of second arm 330, grips casing brake unit 142 arranged on second filling tube 130, moves towards receiving device 600 and puts second gripper unit 170 into holding unit 630, where second gripper unit is secured by a respective securing element. Thereafter, the coupling mechanism between second gripper unit 170 and second end 334 of second arm 330 of robotic device is loosened. Second end 334 of arm 330 is now guided to first gripper unit 340 and coupled thereto.

Robotic device 300 is now moved into the take-up position (cf. Fig. 3). In the take-up position, first and second gripper elements 346, 348 of gripper unit 340, which are in their opened position, are aligned parallel and laterally to tubular packaging casing supply M stored on receiving pin 212 of first storage assembly 210 in the provision position. Gripper unit 340 is aligned to receiving pin 212 such that the first end 340a of gripper unit 340 and the upper end of receiving pin 212 are at least approximately arranged at the same height. In this position, gripping axis 350, at least approximately, coincides with the central axis of receiving pin 212. Then, first and second drive assemblies 343, 344 are activated such that first and second gripper elements 346, 348 are moved into their closed position for grasping tubular packaging casing supply M.

Each of tubular packaging casing supplies M arranged on receiving pins 212 of first storage assembly 210, or on receiving pins 232 of second storage assembly 230, respectively, is aligned with its upper end, which may already be closed by a closure clip C, to the upper end of respective receiving pins 212, 232. In this position, retaining elements 218 of first storage assembly 210, and retaining elements 238 of second storage assembly 230, respectively, are laid-up with pretension on the upper ends of receiving pins 212, 232, and thereby, abut on the upper ends of tubular packaging casing supplies M stored thereon. Retaining elements 218, 238 thereby prevent tubular packaging casing supply M stored on receiving pins 212, 232 from unintentional unfolding and exceeding upwardly from receiving pins 212, 232 of first and second storage assemblies 210, 230.

For removing tubular packaging casing supply M from receiving pin 212, robotic device 300 moves gripper unit 340 vertically upwards along receiving pin 212, and about a length that corresponds to the length of base plate 342 of gripper unit 340. Thereby, it is ensured that tubular packaging casing M is completely removed from receiving pin 212, and collisions between gripper unit 340 and first storage assembly 210 are securely prevented. The tension applied to the upper end of tubular packaging casing supply M by retaining elements 218, 238 is selected such that tubular packaging casing supply M is securely held on retaining pins 212, 232, but may be removed from receiving pins 212, 232 without being damaged by retaining elements 218, 238, which are pushed or pivoted aside or upwards, preferably by gripper unit 340.

Robotic device 300 may then be moved into the allocation position as shown in Fig. 4, in which gripper unit 340 is arranged at least approximately horizontally on the rear side of clipping machine CM. In this position, tubular packaging casing supply M is held ready close to the refill position of filling tube 130. However, moving robotic device 300 into the allocation position may also be omitted.

Robotic device 300 is moved further towards the refill position of second filling tube 130. Gripper unit 340 is positioned with its second end 340b immediately in front of first end 132 of second filling tube 130, with gripping axis 350 being coaxially aligned with central axis A of second filling tube 130.

Robotic device 300 is then moved into the release position by shifting gripper unit 340 along central axis A of filling tube 130, whereby tubular packaging casing supply M is transferred onto second filling tube 130. Tubular packaging casing supply M is shifted onto second filling tube 130 such that its end that is closed by a closure clip C, which is the upper end when arranged on receiving pins 212, 232 of first and second storage assemblies 210, 230, abuts first end 132 of second filling tube 130.

In this situation, retainer device 180 is activated such the outer end of movable arm element 184 of retainer device 180 abuts against tubular packaging casing supply M on second filling tube 130 in the region of its first end 132, such that tubular packaging casing supply M is prevented from unfolding. Naturally, also retainer device 180 may be provided with a respective sensor unit indicating the position of retainer device 180, and particularly, the position of movable arm element 184 or its outer end, respectively, relative to filling tube 130 in the refill position.

Gripper unit 340 is moved into its opened position for releasing tubular packaging casing supply M onto second filling tube 130, and first gripper unit 340 is removed from second filling tube 130.

Subsequently, robotic device moves first gripper unit 340 towards receiving device 600 and puts first gripper unit 340 onto first holding unit 620, where it is secured by a respective securing element. Thereafter, the coupling mechanism between first gripper unit 340 and second end 334 of second arm 330 of robotic device 300 is loosened. Second end 334 of arm 330 is now guided to second gripper unit 170 and coupled thereto.

Second gripper unit 170 with casing brake unit 142 of second casing brake assembly 140 is now moved towards second filling tube 130 in the refill position, shifted onto first end 132 of second filling tube130 and released from second gripper unit 170. Casing brake unit 142 now secures tubular packaging casing supply M on second filling tube 130, and retainer device 180 is deactivated such that the outer end of movable arm element 184 disengages from tubular packaging casing supply M.

In order to continue the production of sausage-shaped products S, filling tube assembly 100 is rotated about rotation axis 154 of revolver plate 150, such that first filling tube 110 is transferred into the refill position, and second filling tube 130 is moved into the lateral position in front of clipping machine CM. Second filling tube 130 with tubular packaging casing supply M thereon is pivoted into the filling position, and the production of sausage-shaped products S may be continued.

Refill of tubular packaging casing supply M onto first filling tube 110 is executed in the same manner as described in conjunction with second filling tube 130.

It has to be noted that filling tube assembly 100, for moving first and second filling tubes 110, 130 from the lateral position into the refill position and vice versa, may be rotated stepwise about an angle of approximately 180° in the same direction, i.e. clockwise or counter clockwise, such that each filling tube 110, 130 rotates about an angle of 360°, or reversibly about an angle of at least approximately 180°.

For enabling a correct grasping of tubular packaging casing supply M by gripper unit 340, and for exactly position tubular packaging casing supply M on first and second filling tubes 110; 130, the respective positions and movement paths of robotic device 300 and gripper unit 340 may be programmed and implemented into a respective control logic of robotic device 300 in control unit RCU of robotic device 300 or in the control unit CU of clipping machine CM.

In order to ensure a safe and reliable production process on system 1000, and to further ensure a safe refill operation, a first sensor unit SU1 is provided to gripper unit 340 of robotic device 300 (cf. Fig. 9). First sensor unit SU1 is arranged in the region first end 340a of gripper unit 340 such that it faces towards gripper elements 346, 348.

First sensor unit SU1 is adapted to detect the position of gripper unit 340 relative to tubular packaging casing supply M provided on pin 212 of first storage assembly 210 in the provision position, during moving robotic device 300 into the take-up position. First sensor unit SU1 may include a suitable sensor element, like an optical sensor or a proximity sensor. Furthermore, for detecting or verifying the orientation of gripper unit 340, first sensor unit SU1 may also include a position sensor.

In the same way, first sensor unit SU1 may also be used for detecting the position of gripper unit 340 relative to first or second filling tube 110, 130 in the refill position, for securing a correct transfer of tubular packaging casing supply M onto first or second filling tube 110; 130.

A second sensor unit SU2 may be provided, which includes a sensor element for detecting the gripping force exerted to tubular packaging casing supply M by first and second gripper elements 346, 348. Said sensor element may be a force sensor coupled to first and/or second drive assemblies 343, 344 of gripper unit 340. Second sensor unit SU2, particularly, its force sensor, may be integrated in first and/or second drive assemblies 343, 3644, or may be attached to gripper elements 346, 348.

It has further to be noted that also second gripper unit 170 may be provided with respective sensor units SU1 or SU2, for detecting the position and/or the gripping force of second gripper unit 170 relative to the respective casing brake assembly 120, 140.

The control operation during refilling tubular packaging casing supply M onto second filling tube 130 may be executed as follows:
Control unit CU of clipping machine CM initially activates robotic device 300 for starting refill of tubular packaging casing supply M onto second filling tube 130 in the refill position. Said activation signal may be output to robotic device 300 on the basis of a signal received from a sensor unit (not shown) that is coupled to filling tube assembly 100. Said sensor unit may output a signal corresponding to a specific position of filling tube assembly 100, e.g. in which filling tube 110; 130 moving towards the refill position, is in a predefined angular position relative to the refill position.

Upon receipt of said signal of the sensor unit coupled to filling tube assembly 100, robotic device 300 is activated. Robotic device 300 with second gripper unit 170 at second end 334 of second arm 330, moves towards second filling tube 130 meanwhile being in the refill position. Sensor unit SU1 of second gripper unit 170 detects the position of second gripper unit 170 relative to second filling tube 130, and causes second gripper unit to grip and remove casing brake unit 142 from second filling tube 130. Second gripper unit 170 is then put onto second holding unit 630 of receiving device 600 and secured there. A sensor at receiving device 600 detects first and second gripper units 340, 170 in their holding units 620, 630, and allows robotic device 300 to release second gripper unit 170 in second holding unit 630, and to take up first gripper unit 340 from first holding unit 620.

Robotic device 300 is then moved towards the take-up position for taking up a tubular packaging casing supply M from storage device 200 with first gripper unit 340.

In storage device, a receiving pin 212 of first storage assembly 210 with a tubular packaging casing supply M stored thereon, is positioned in the provision position. Third sensor unit SU3 detects the presence of tubular packaging casing supply M on said receiving pin 212, and outputs a respective signal to control unit CU of clipping machine CM, or alternatively to control unit RCU of robotic device 600. In the case that no tubular packaging casing supply M is stored on said receiving pin 212, sensor unit SU3 may cause to rotate first storage assembly 210 such that the next receiving pin 212 is moved into the provision position. These steps may be executed until a receiving pin 212 with a tubular packaging casing supply M stored thereon, is in the provision position. Alternatively, robotic device 600 may be stopped, and a respective signal may be sent to an operator.

Furthermore, in the case that no receiving pin 212 of first storage assembly is provided with a tubular packaging casing supply M, rotation assembly 250 may be activated to rotate storage device 200 about rotation axis 252 and about an angle of 180°, to move first storage assembly 210 from the unloading position into the loading position, in which tubular packaging casing supply M is loaded onto receiving pins 212. Thereby, second storage assembly 230 is moved from the loading position into the unloading position in which one of its receiving pins 232 may be placed in the provision position.

When arriving at the take-up position, first sensor unit SU1 of first gripper unit 340 detects receiving pin 212 in the provision position and the position of gripper unit 640 relative to said receiving pin 212. Robotic device 340 positions first gripper unit 340 such that gripper elements 346, 348 are positioned laterally and parallel to receiving pin 212 with tubular packaging casing supply M thereon in the provision position. Gripping axis 350 is aligned coaxially with the central axis of receiving pin 212. Gripper elements 346, 348 are then moved towards each other into their closed position, by first and second drive assemblies 343, 344, for grasping tubular packaging casing supply M stored on receiving pin 212. Second sensor unit SU2 detects the closing force exerted by gripper elements 346, 348 onto tubular packaging casing supply M. After a predetermined force value is reached, first and second drive assemblies 343, 344 are stopped. Gripper unit 340 is then moved upwardly along receiving pin 212 until first gripper unit 340 is positioned with its second end 340b above the upper end of receiving pin 212.

Thereafter, robotic device 300 is moved towards second filling tube 130 in the refill position, and firs gripper unit 340 is positioned coaxially with its gripper axis 350 to central axis A of second filling tube 130.

In the case that gripper unit 340 is correctly positioned in front of second filling tube 130, a signal is provided by sensor unit SU1 to control unit RCU of robotic device 300, causing robotic device 300 to shift gripper unit 340 along central axis A of second filling tube 130, such that tubular packaging casing supply M is transferred onto second filling tube 130. While shifting tubular packaging casing supply M onto second filling tube 130, first sensor unit SU1 may further detect the position of first end 340a of first gripper unit 340 relative to second filling tube 130, and may stop robotic device 300 when first end 340a, and thus, the end of tubular casing supply M, respectively, has reached first end 132 of second filling tube 130. Alternatively or additionally, this position may be defined in the programming of robotic device 300, which automatically stops in this position.

Alternatively, tubular packaging casing supply M may also be positioned on second filling tube 130 such that its end does not coincide with first end 132 of second filling tube 130, but is positioned a short distance away from first end 132 of second filling tube 130.

Further, alternatively, first gripper unit 340 may be shifted onto second filling tube 130 such that the end of tubular casing supply M abuts first end 132 of second filling tube 130, and that a short section of tubular casing supply M is unfolded at first end 132 of second filling tube 130.

Subsequently, retainer device 180 is activated to secure tubular packaging casing supply M on second filling tube 130. A corresponding sensor may output a signal to control unit RCU of robotic device 300. Said signal may be used to activate first gripper unit 340 such that first and second drive assemblies 343, 344 of first gripper unit 340 are activated to move gripper elements 346, 348 into their opened position, to release tubular packaging casing supply M onto second filling tube 130. Tubular packaging casing supply M is secured on filling tube 130 against unintentional unfolding by retainer device 180.

Second sensor unit SU2 may confirm that tubular packaging casing supply M has been released, e.g. since no further force is applied to tubular packaging casing supply M by gripper elements 346, 348 and/or gripper elements 346, 348 are in a predefined position, and first gripper unit 340 is removed from filling tube 130.

Thereafter, robotic device 300 puts first gripper unit 340 into first holding unit 620, where a sensor unit confirms that first gripper unit is hold and secured in first holding unit 620. Robotic device 300 than takes up second gripper unit 170 from second holding unit of receiving device 600, with second casing brake unit 142 therein, and moves second gripper unit 170 towards second filling tube 130.

Second casing brake unit 142 is shifted onto first end 132 of second filling tube 130 by second gripper unit 170. A respective signal from first sensor unit SU1 indicates that second casing brake unit 142 is correctly arranged on first end 132 of second filling tube 130, and robotic device 300 is moved away from second filling tube 130 into a standby position, like the allocation position shown in Fig. 5,and from which the refill operation for refilling tubular packaging casing supply M onto first filling tube 110 is executed in the same manner as described above in conjunction with second filling tube 130.

Upon a respective signal indicating that tubular packaging casing supply M on first filling tube 110 arranged in the filling position is used up or consumed, filling tube assembly 100 is rotated about rotation axis 154 controlled by control unit CU of clipping machine CM, for moving second filling tube 130 with tubular packaging casing supply M stored thereon, toward the filling position.

As disclosed above, the moving paths between the positions of robotic device 300 may fixedly be programmed according to selected conditions, e.g. such that robotic device 300 is moved on the shortest path or in the shortest time. Alternatively, or additionally, robotic device 300 may be provided with additional sensors, like proximity sensors, that may sense the surrounding area of robotic device 300, for detecting possible barriers on the moving path of robotic device 300, like parts of clipping machine CM or other peripheral machines, and for preventing collisions therewith. Further, additionally, the information provided by these additional sensors may be used to optimize the moving path of robotic device 300, by an operator that varies the moving path or by self-learning of robotic device 300.

Furthermore, alternative moving paths and/or positions of robotic device 300 may be stored in control unit RCU of robotic device 300 or in control unit CU of clipping machine CM. Said alternative moving paths and/or positions of robotic device 300 may be used for controlling clipping machine CM and robotic device 300 dependent on the kind of sausage-shaped products S to be produced, e.g. with regard to a varied casing material consumption, or dependent on the kind of peripheral machines used, like alternative filling tube assemblies or storage devices. First gripper unit 340 and second gripper unit 170 are replaceable mounted to second end 334 of second arm 330 of robotic device 300. Thus, replacing first gripper unit 340 or second gripper unit 170 by alternative gripper units, e.g. in adaption to the size of tubular packaging casing supply M or the kind and size of a casing brake assembly, it may also be necessary to vary the respective positions and/or the moving path of robotic device 300.

Moreover, sensor units SU1, SU2, SU3 and any additional sensor unit may be coupled to control unit CU of clipping machine CM, for activating clipping machine CM and/or robotic device 300, or for deactivating clipping machine CM and/or robotic device 300, e.g. in case of missing tubular packaging casing supply M or possible miss positioning of components of system 1000. However, it is also possible that one or more of sensor units SU1, SU2, SU3 and any additional sensor unit are coupled to control unit RCU of robotic device 300 for activating or deactivating robotic device 600 if necessary.

Furthermore, in conjunction with Figs. 2 to 10, filling tube assembly 100 has been described as including two filling tubes 110, 130. It has to be noted that the process of refilling tubular packaging casing supply onto a filling tube as disclosed above, may also be executed in a system with a filling tube assembly that includes only one filling tube, or that has more than two filling tubes, like three or four filling tubes. In such a case, only the angle of rotation for transferring a filling tube into the refill position varies, whereas the remaining steps and control operations may be executed as described above.

## Claims

1. A method for controlling a robotic device (300) by a control unit (CU) of a clipping machine (CM), the robotic device (300) being arranged in a system (1000) for producing sausage-shaped products (S) by filling a filling material into a tubular packaging casing supply (M) arranged on a filling tube (110, 130) of the clipping machine (CM), wherein the system (1000) comprises at least the clipping machine (CM) provided with at least a first filling tube (110) and preferably a second filling tube (130) and a first and preferably a second casing brake assembly (120, 140), a storage device (200) for storing at least one tubular packaging casing supply (M), and a robotic device (300) for transferring a tubular packaging casing supply (M) from the storage device (200) onto a filling tube (110, 130) of the clipping machine (CM), wherein the control unit (CU) is adapted to provide control commands at least to the robotic device (300), and wherein the robotic device (300) includes a first gripper unit (340) for gripping a tubular packaging casing supply (M) and a second gripper unit (170) for gripping the first casing brake assembly (120), the method comprises the steps of:
- removing the casing brake assembly (120, 140) from the filling tube (110, 130) by the second gripper unit (170);
- moving the robotic device (300) into a take-up position for taking up by the first gripper unit (340) a tubular packaging casing supply (M) provided in a storage device (200, 700);
- gripping the tubular packaging casing supply (M) provided in a storage device (200, 700) by the first gripper unit (340);
- moving the robotic device (300) from the take-up position toward the filling tube (110, 130);
- transferring the tubular packaging casing supply (M) onto the filling tube (110, 130) by the first gripper unit (340);
- releasing the tubular packaging casing supply (M) onto the filling tube (110) of the clipping machine (CM) by the first gripper unit (640), and
- positioning the casing brake assembly (120, 140) on the filling tube (110, 130) by the second gripper unit (170).

2. The method according to claim 1, further comprising the step of:
- exchanging a first gripper unit (340) of robotic device (300), for gripping a tubular packaging casing supply (M) by a second gripper unit (170) for gripping the at least first casing brake assembly (120), for reversibly removing the first casing brake assembly (120) from the at least first filling tube (110).

3. The method according to claim 1 or 2, further comprising the step of:
- securing the tubular packaging casing supply (M) on the first filling tube (110) by at least one retainer device (180).

4. The method according to any one of claims 1 to 3,
wherein the robotic device (300) includes at least a first sensor unit (SU1) associated with the first gripper unit (340), for detecting the position of the gripper unit (340) relative to the tubular packaging casing supply (M) in the storage device (200) and/or for detecting the position of the gripper unit (340) relative to the filling tube (110, 130).

5. The method according to any one of claims 1 to 4,
wherein the first gripper unit (340) at least a first and a second gripper element (346, 348) being arranged laterally along a longitudinally extending gripping axis (350), and at least a second sensor unit (SU2), for sensing the gripping force exerted by the at least first and second gripper elements (346, 348) onto the tubular packaging casing supply (M) wherein, preferably, the method further comprising the step of:
- limiting the gripping force exerted by the at least first and second gripper elements (346, 348) onto the tubular packaging casing supply (M) to a predefined value.

6. The method according to any one of claims 1 to 5, further comprising the step of:
- moving the first gripper unit (300) along a predefined moving path towards the filling tube (110, 130) of the clipping machine (CM).

7. The method according to any one of claims 1 to 6, further comprising the steps of:
- position the first gripper unit (340) with its gripping axis (350) coaxially to the central axis of the filling tube (110, 130) and in front of the filling tube (110, 130); and
- shifting the tubular packaging casing supply (M) onto the filling tube (110, 130) by the first gripper unit (340).

8. The method according to claim 7, when dependent on claim 2, further comprising the steps of:
- detecting by the first sensor unit (SU1) the position of the tubular packaging casing supply (M) on the filling tube (110, 130); and
- releasing the tubular packaging casing supply (M) onto the filling tube (110, 130).

9. The method according to any one of claims 1 to 8,
wherein the robotic device (300) is activated upon a signal indicating a specific condition of the clipping machine (CM).

10. The method according to any one of claims 1 to 9,
wherein the robotic device (300) is deactivated upon a signal indicating a specific condition of the clipping machine (CM) and/or a specific condition of the storage device (200, 700).

11. The method according to any one of claims 1 to 10,
wherein the clipping machine (CM) includes a first filling tube (110) and at least a second filling tube (130), with one filling tube (110; 130) being arranged in a filling position in which filling material may be fed into the tubular packaging casing (M), and the other filling tube (130; 110) being arranged in a refill position in which a tubular packaging casing supply (M) is fed onto the filling tube (130), and
wherein the robotic device (300) is activated upon a signal indicating one of the first or second filling tubes (110; 130) being arranged in or moving towards the refill position.

12. The method according to any one of claims 1 to 11,
wherein the first gripper unit (340) includes at least one further sensor unit for detecting the position of the gripper elements (646, 648).

13. A system for producing sausage-shaped products (S), like sausages, by filling a filling material into a tubular packaging casing supply (M) arranged on a filling tube (110, 130) of a clipping machine (CM), comprising at least:
- a storage device (200, 700) for storing at least one packaging casing supply (M);
- a clipping machine (CM) provided with at least a first filling tube (110) and preferably a second filling tube (130) onto each of which a packaging casing supply (M) can be applied;
- a robotic device (300) for transferring a packaging casing supply (M) from the storage device (200, 700) onto a filling tube (110, 130) of the clipping machine (CM), and having at least a first gripper unit (340) for gripping a tubular packaging casing supply (M), and a second gripper unit (170) for gripping a casing brake assembly of the clipping machine (CM); and
- a control unit (CU) for at least partially controlling the operation of at least the robotic device (300),
wherein the control unit (CU) is adapted to control the operation of the robotic device depending on the filling status of a sausage-shaped product to be filled.

14. The system according to claim 13,
wherein the filling tubes (110, 130) of the clipping machine (CM) are configured such that one filling tube (110) can assume a filling position provided for filling a tubular packaging casing supply (M) with a filling material, and the other filling tube (130) can assume a refilling position provided for loading a new tubular packaging casing supply (M) onto the filling tube (130), and vice versa, wherein the control unit (CU) is configured to control the robotic device (300) such that the robotic device (300) applies a new tubular packaging casing supply (M) onto the filling tube (130) positioned in the refilling position while the other filling tube (110) is in the filling position.

15. Use of a robotic device (300) including a gripper unit (340), controlled by the method according to claims 1 to 12 and arranged in a system (1000) for producing sausage-shaped products (S) according to claims 13 or 14.

## Patentansprüche

1. Verfahren zum Steuern einer Robotervorrichtung (300) durch eine Steuereinheit (CU) einer Clipmaschine (CM), wobei die Robotervorrichtung (300) in einem System (1000) zum Herstellen von wurstförmigen Produkten (S) durch Einfüllen eines Füllguts in einen auf einem Füllrohr (110, 130) der Clipmaschine (CM) angeordneten Schlauchverpackungshüllenvorrat (M) angeordnet ist, wobei das System (1000) wenigstens die Clipmaschine (CM), die mit wenigstens einem ersten Füllrohr (110) und vorzugsweise einem zweiten Füllrohr (130) und einer ersten und vorzugsweise einer zweiten Darmbremsanordnung (120, 140) versehen ist, eine Lagervorrichtung (200) zum Vorhalten wenigstens eines Schlauchverpackungshüllenvorrats (M) und eine Robotervorrichtung (300) zum Überführen eines Schlauchverpackungshüllenvorrats (M) aus der Lagervorrichtung (200) auf ein Füllrohr (110, 130) der Clipmaschine (CM) umfasst, wobei die Steuereinheit (CU) dazu eingerichtet ist, Steuerbefehle wenigstens an die Robotervorrichtung (300) zu liefern, und wobei die Robotervorrichtung (300) eine erste Greifereinheit (340) zum Greifen eines Schlauchverpackungshüllenvorrats (M) und eine zweite Greifereinheit (170) zum Greifen der ersten Darmbremsanordnung (120) umfasst, wobei das Verfahren die Schritte umfasst:
- Entfernen der Darmbremsanordnung (120, 140) von dem Füllrohr (110, 130) durch die zweite Greifereinheit (170);
- Bewegen der Robotervorrichtung (300) in eine Aufnahmeposition zum Aufnehmen eines Schlauchverpackungshüllenvorrats (M), der in einer Lagervorrichtung (200, 700) bereitgestellt ist, durch die erste Greifereinheit (340);
- Greifen des Schlauchverpackungshüllenvorrats (M), der in einer Lagervorrichtung (200, 700) bereitgestellt wird, durch die erste Greifereinheit (340);
- Bewegen der Robotervorrichtung (300) von der Aufnahmeposition in Richtung zu dem Füllrohr (110, 130);
- Überführen des Schlauchverpackungshüllenvorrats (M) auf das Füllrohr (110, 130) mittels der ersten Greifereinheit (340);
- Freisetzen des Schlauchverpackungshüllenvorrats (M) auf das Füllrohr (110) der Clipmaschine (CM) durch die erste Greifereinheit (640), und
- Positionieren der Darmbremsanordnung (120, 140) auf dem Füllrohr (110, 130) mittels der zweiten Greifereinheit (170).

2. Verfahren nach Anspruch 1, das ferner den Schritt umfasst:
- Austauschen einer ersten Greifereinheit (340) der Robotervorrichtung (300) zum Greifen eines Schlauchverpackungshüllenvorrats (M) durch eine zweite Greifereinheit (170) zum Greifen der wenigstens ersten Darmbremsanordnung (120), um die erste Darmbremsanordnung (120) reversibel von dem wenigstens ersten Füllrohr (110) zu entfernen.

3. Verfahren nach Anspruch 1 oder 2, das außerdem den Schritt umfasst:
- Sichern des Schlauchverpackungshüllenvorrats (M) auf dem ersten Füllrohr (110) durch wenigstens eine Haltevorrichtung (180).

4. Verfahren nach einem der Ansprüche 1 bis 3,
wobei die Robotervorrichtung (300) wenigstens eine der ersten Greifereinheit (340) zugeordnete erste Sensoreinheit (SU1) zum Erfassen der Position der Greifereinheit (340) relativ zu dem Schlauchverpackungshüllenvorrat (M) in der Lagervorrichtung (200) und/oder zum Erfassen der Position der Greifereinheit (340) relativ zu dem Füllrohr (110, 130) aufweist.

5. Verfahren nach einem der Ansprüche 1 bis 4,
wobei die erste Greifereinheit (340) wenigstens ein erstes und ein zweites Greiferelement (346, 348), die lateral entlang einer sich in Längsrichtung erstreckenden Greifachse (350) angeordnet sind, und wenigstens eine zweite Sensoreinheit (SU2) zum Erfassen der Greifkraft, die durch das wenigstens eine erste und zweite Greiferelement (346, 348) auf den Schlauchverpackungshüllenvorrat (M) ausgeübt wird, wobei das Verfahren vorzugsweise ferner den Schritt umfasst:
- Begrenzen der von dem wenigstens einen ersten und zweiten Greiferelement (346, 348) auf den Schlauchverpackungshüllenvorrat (M) ausgeübten Greifkraft auf einen vordefinierten Wert.

6. Verfahren nach einem der Ansprüche 1 bis 5, das ferner den Schritt umfasst:
- Bewegen der ersten Greifereinheit (300) entlang eines vordefinierten Bewegungspfades in Richtung zu dem Füllrohr (110, 130) der Clipmaschine (CM).

7. Verfahren nach einem der Ansprüche 1 bis 6, das ferner die Schritte umfasst:
- Positionieren der ersten Greifereinheit (340) mit ihrer Greifachse (350) koaxial zur Mittelachse des Füllrohrs (110, 130) und vor dem Füllrohr (110, 130); und
- Schieben des Schlauchverpackungshüllenvorrats (M) auf das Füllrohr (110, 130) mittels der ersten Greifereinheit (340).

8. Verfahren nach Anspruch 7, wenn abhängig von Anspruch 2, das ferner die Schritte umfasst:
- Erfassen der Position des Schlauchverpackungshüllenvorrats (M) auf dem Füllrohr (110, 130) durch die erste Sensoreinheit (SU1); und
- Freigeben des Schlauchverpackungshüllenvorrats (M) auf dem Füllrohr (110, 130).

9. Verfahren nach einem der Ansprüche 1 bis 8,
wobei die Robotervorrichtung (300) bei einem Signal aktiviert wird, das einen spezifischen Zustand der Clipmaschine (CM) anzeigt.

10. Verfahren nach einem der Ansprüche 1 bis 9,
wobei die Robotervorrichtung (300) bei einem Signal deaktiviert wird, das einen spezifischen Zustand der Clipmaschine (CM) und/oder einen spezifischen Zustand der Lagervorrichtung (200, 700) anzeigt.

11. Verfahren nach einem der Ansprüche 1 bis 10,
wobei die Clipmaschine (CM) ein erstes Füllrohr (110) und wenigstens ein zweites Füllrohr (130) aufweist, wobei ein Füllrohr (110; 130) in einer Füllposition angeordnet ist, in der Füllgut in die schlauchförmige Verpackungshülle (M) eingefüllt werden kann, und das andere Füllrohr (130; 110) in einer Nachladeposition angeordnet ist, in der ein Schlauchverpackungshüllenvorrat (M) auf das Füllrohr (130) geladen wird, und
wobei die Robotervorrichtung (300) bei einem Signal aktiviert wird, das anzeigt, dass eines von dem ersten oder dem zweiten Füllrohr (110; 130) in der Nachladeposition angeordnet ist oder sich in Richtung zu dieser bewegt.

12. Verfahren nach einem der Ansprüche 1 bis 11,
wobei die erste Greifereinheit (340) wenigstens eine weitere Sensoreinheit zum Erfassen der Position der Greiferelemente (646, 648) aufweist.

13. System zur Herstellung wurstförmiger Produkte (S), wie Würste, durch Einfüllen eines Füllgutes in einen auf einem Füllrohr (110, 130) einer Clipmaschine (CM) angeordneten Schlauchverpackungshüllenvorrat (M), umfassend wenigstens:
- eine Lagervorrichtung (200, 700) zum Lagern wenigstens eines Verpackungshüllenvorrats (M);
- eine Clipmaschine (CM) mit wenigstens einem ersten Füllrohr (110) und vorzugsweise einem zweiten Füllrohr (130), auf die jeweils ein Verpackungshüllenvorrat (M) aufbringbar ist;
- eine Robotervorrichtung (300) zum Überführen eines Verpackungshüllenvorrats (M) von der Lagervorrichtung (200, 700) auf ein Füllrohr (110, 130) der Clipmaschine (CM), und aufweisend wenigstens eine erste Greifereinheit (340) zum Greifen eines Schlauchverpackungshüllenvorrats (M), und eine zweite Greifereinheit (170) zum Greifen einer Darmbremsanordnung der Clipmaschine (CM); und
- eine Steuereinheit (CU) zum wenigstens teilweisen Steuern des Betriebs wenigstens der Robotervorrichtung (300),
wobei die Steuereinheit (CU) dazu eingerichtet ist, den Betrieb der Robotervorrichtung in Abhängigkeit von dem Füllstand eines zu füllenden wurstförmigen Produkts zu steuern.

14. Verfahren nach Anspruch 13,
wobei die Füllrohre (110, 130) der Clipmaschine (CM) so konfiguriert sind, dass ein Füllrohr (110) eine Füllposition zum Befüllen eines Schlauchverpackungshüllenvorrats (M) mit einem Füllgut einnehmen kann und das andere Füllrohr (130) eine Nachladeposition zum Laden eines neuen Schlauchverpackungshüllenvorrats (M) auf das Füllrohr (130) einnehmen kann, und umgekehrt, wobei die Steuereinheit (CU) dazu konfiguriert ist, die Robotervorrichtung (300) so zu steuern, dass die Robotervorrichtung (300) einen neuen Schlauchverpackungshüllenvorrat (M) auf das in der Nachladeposition positionierte Füllrohr (130) aufbringt, während sich das andere Füllrohr (110) in der Füllposition befindet.

15. Verwendung einer Robotervorrichtung (300) mit einer Greifereinheit (340), die mit dem Verfahren nach einem der Ansprüche 1 bis 12 gesteuert wird und in einem System (1000) zur Herstellung von wurstförmigen Produkten (S) nach einem der Ansprüche 13 oder 14 angeordnet ist.

## Revendications

1. Procédé de commande d'un dispositif robotique (300) par une unité de commande (CU) d'une machine d'agrafage (CM), le dispositif robotique (300) étant agencé dans un système (1000) destiné à produire des produits en forme de saucisse (S) par remplissage d'un matériau de remplissage dans une alimentation (M) d'enveloppe d'emballage tubulaire agencée sur un tube de remplissage (110, 130) de la machine d'agrafage (CM), le système (1000) comprenant au moins la machine d'agrafage (CM) pourvue d'au moins un premier tube de remplissage (110) et de préférence d'un second tube de remplissage (130) et d'un premier et de préférence d'un second ensemble frein (120, 140) d'enveloppe, un dispositif de stockage (200) destiné à stocker au moins une alimentation (M) d'enveloppe d'emballage tubulaire et un dispositif robotique (300) destiné à transférer une alimentation (M) d'enveloppe d'emballage tubulaire à partir du dispositif de stockage (200) sur un tube de remplissage (110, 130) de la machine d'agrafage (CM), l'unité de commande (CU) étant conçue pour fournir des instructions de commande au moins au dispositif robotique (300) et le dispositif robotique (300) comprenant une première unité de préhension (340) destinée à saisir une alimentation (M) d'enveloppe d'emballage tubulaire et une seconde unité de préhension (170) destinée à saisir le premier ensemble frein (120) d'enveloppe, le procédé comprenant les étapes de :
- retrait de l'ensemble frein (120, 140) d'enveloppe du tube de remplissage (110, 130) par la seconde unité de préhension (170) ;
- déplacement du dispositif robotique (300) dans une position de prélèvement pour le prélèvement, par la première unité de préhension (340), d'une alimentation (M) d'enveloppe d'emballage tubulaire disposée dans un dispositif de stockage (200, 700) ;
- préhension de l'alimentation (M) d'enveloppe d'emballage tubulaire disposée dans un dispositif de stockage (200, 700) par la première unité de préhension (340) ;
- déplacement du dispositif robotique (300) à partir de la position de prélèvement vers le tube de remplissage (110, 130) ;
- transfert de l'alimentation (M) d'enveloppe d'emballage tubulaire sur le tube de remplissage (110, 130) par la première unité de préhension (340) ;
- libération de l'alimentation (M) d'enveloppe d'emballage tubulaire sur le tube de remplissage (110) de la machine d'agrafage (CM) par la première unité de préhension (640), et
- positionnement de l'ensemble frein (120, 140) d'enveloppe sur le tube de remplissage (110, 130) par la seconde unité de préhension (170).

2. Procédé selon la revendication 1, comprenant en outre l'étape de :
- échange d'une première unité de préhension (340) d'un dispositif robotique (300), destinée à saisir une alimentation (M) d'enveloppe d'emballage tubulaire, par une seconde unité de préhension (170) destinée à saisir ledit au moins un premier ensemble frein (120) d'enveloppe, afin de retirer de manière réversible le premier ensemble frein (120) d'enveloppe dudit au moins un premier tube de remplissage (110).

3. Procédé selon la revendication 1 ou 2, comprenant en outre l'étape de :
- fixation de l'alimentation (M) d'enveloppe d'emballage tubulaire sur le premier tube de remplissage (110) par au moins un dispositif de retenue (180).

4. Procédé selon l'une quelconque des revendications 1 à 3,
le dispositif robotique (300) comprenant au moins une première unité de capteur (SU1), associée à la première unité de préhension (340), destinée à détecter la position de l'unité de préhension (340) par rapport à l'alimentation (M) d'enveloppe d'emballage tubulaire dans le dispositif de stockage (200) et/ou à détecter la position de l'unité de préhension (340) par rapport au tube de remplissage (110, 130).

5. Procédé selon l'une quelconque des revendications 1 à 4,
la première unité de préhension (340) au moins un premier et un second élément de préhension (346, 348) agencés latéralement le long d'un axe de préhension (350) s'étendant longitudinalement et au moins une seconde unité de capteur (SU2) destinée à détecter la force de préhension exercée par lesdits au moins premier et second éléments de préhension (346, 348) sur l'alimentation (M) d'enveloppe d'emballage tubulaire, le procédé comprenant en outre de préférence l'étape de :
- limitation de la force de préhension exercée par lesdits au moins premier et second éléments de préhension (346, 348) sur l'alimentation (M) d'enveloppe d'emballage tubulaire à une valeur prédéfinie.

6. Procédé selon l'une quelconque des revendications 1 à 5, comprenant en outre l'étape de :
- déplacement de la première unité de préhension (300) le long d'un trajet de déplacement prédéfini vers le tube de remplissage (110, 130) de la machine d'agrafage (CM).

7. Procédé selon l'une quelconque des revendications 1 à 6, comprenant en outre les étapes de :
- positionnement de la première unité de préhension (340) avec son axe de préhension (350) coaxialement à l'axe central du tube de remplissage (110, 130) et devant le tube de remplissage (110, 130) ; et
- décalage de l'alimentation (M) d'enveloppe d'emballage tubulaire sur le tube de remplissage (110, 130) par la première unité de préhension (340).

8. Procédé selon la revendication 7, lorsqu'elle dépend de la revendication 2, comprenant en outre les étapes de :
- détection, par la première unité de capteur (SU1), de la position de l'alimentation (M) d'enveloppe d'emballage tubulaire sur le tube de remplissage (110, 130) ; et
- libération de l'alimentation (M) d'enveloppe d'emballage tubulaire sur le tube de remplissage (110, 130).

9. Procédé selon l'une quelconque des revendications 1 à 8,
le dispositif robotique (300) étant activé sur un signal indiquant un état spécifique de la machine d'agrafage (CM).

10. Procédé selon l'une quelconque des revendications 1 à 9,
le dispositif robotique (300) étant désactivé sur un signal indiquant un état spécifique de la machine d'agrafage (CM) et/ou un état spécifique du dispositif de stockage (200, 700).

11. Procédé selon l'une quelconque des revendications 1 à 10,
la machine d'agrafage (CM) comprenant un premier tube de remplissage (110) et au moins un second tube de remplissage (130), un tube de remplissage (110 ; 130) étant agencé dans une position de remplissage dans laquelle un matériau de remplissage peut être introduit dans l'enveloppe (M) d'emballage tubulaire et l'autre tube de remplissage (130 ; 110) étant agencé dans une position de recharge dans laquelle une alimentation (M) d'enveloppe d'emballage tubulaire est introduite sur le tube de remplissage (130), et
le dispositif robotique (300) étant activé sur un signal indiquant qu'un tube parmi le premier ou le second tube de remplissage (110 ; 130) est agencé dans la position de recharge ou se déplace vers celle-ci.

12. Procédé selon l'une quelconque des revendications 1 à 11,
la première unité de préhension (340) comprenant au moins une autre unité de capteur destinée à détecter la position des éléments de préhension (646, 648).

13. Système de production de produits en forme de saucisse (S), tels que des saucisses, par remplissage d'un matériau de remplissage dans une alimentation (M) d'enveloppe d'emballage tubulaire agencée sur un tube de remplissage (110, 130) d'une machine d'agrafage (CM), comprenant au moins :
- un dispositif de stockage (200, 700) destiné à stocker au moins une alimentation (M) d'enveloppe d'emballage ;
- une machine d'agrafage (CM) pourvue d'au moins un premier tube de remplissage (110) et de préférence d'un second tube de remplissage (130) sur chacun desquels une alimentation (M) d'enveloppe d'emballage peut être appliquée ;
- un dispositif robotique (300) destiné à transférer une alimentation (M) d'enveloppe d'emballage à partir du dispositif de stockage (200, 700) sur un tube de remplissage (110, 130) de la machine d'agrafage (CM) et présentant au moins une première unité de préhension (340) destinée à saisir une alimentation (M) d'enveloppe d'emballage tubulaire et une seconde unité de préhension (170) destinée à saisir un ensemble frein d'enveloppe de la machine d'agrafage (CM) ; et
- une unité de commande (CU) destinée à commander au moins partiellement le fonctionnement d'au moins le dispositif robotique (300),
l'unité de commande (CU) étant conçue pour commander le fonctionnement du dispositif robotique en fonction de l'état de remplissage d'un produit en forme de saucisse à remplir.

14. Système selon la revendication 13,
les tubes de remplissage (110, 130) de la machine d'agrafage (CM) étant conçus de telle sorte qu'un tube de remplissage (110) peut prendre une position de remplissage prévue pour le remplissage d'une alimentation (M) d'enveloppe d'emballage tubulaire par un matériau de remplissage et que l'autre tube de remplissage (130) peut prendre une position de recharge prévue pour le chargement d'une nouvelle alimentation (M) d'enveloppe d'emballage tubulaire sur le tube de remplissage (130) et inversement,
l'unité de commande (CU) étant conçue pour commander le dispositif robotique (300) de telle sorte que le dispositif robotique (300) applique une nouvelle alimentation (M) d'enveloppe d'emballage tubulaire sur le tube de remplissage (130) positionné dans la position de recharge tandis que l'autre tube de remplissage (110) est dans la position de remplissage.

15. Utilisation d'un dispositif robotique (300) comprenant une unité de préhension (340), commandée par le procédé selon les revendications 1 à 12 et agencée dans un système (1000) destiné à produire des produits en forme de saucisse (S) selon les revendications 13 ou 14.
